# EUROPÄISCHE PATENTSCHRIFT

(11) **EP 4 308 490 B1**
(45) Veröffentlichungstag und Bekanntmachung des Hinweises auf die Patenterteilung: **23.07.2025**
(21) Anmeldenummer: 22708522.2
(22) Anmeldetag: 17.02.2022
(51) Int. Cl.: B65G 63/00, B65G 1/04, B65G 63/02

(54) **CONTAINERTERMINAL**
CONTAINER TERMINAL
TERMINAL DE CONTENEURS

(30) Priorität: 18.03.2021 AT 562021
(43) Veröffentlichungstag der Anmeldung: 24.01.2024
(73) Patentinhaber: Hans Künz GmbH, 6971 Hard (Vbg.) (AT)
(72) Erfinder: BEER, Roman, 6850 Dornbirn (AT); KLAPPER, Georg, 6971 Hard (AT)
(74) Vertreter: Torggler & Hofmann Patentanwälte - Rankweil
(86) Internationale Anmeldenummer: PCT/EP2022/053871
(87) Internationale Veröffentlichungsnummer: WO 2022/194476

(56) Entgegenhaltungen:
- EP-A1- 0 518 081
- EP-A1- 2 287 093
- WO-A1-2016/196815
- DE-U1- 202018 106 627
- GB-A- 1 333 745

## Beschreibung

Die vorliegende Erfindung betrifft ein Containerterminal gemäß des Oberbegriffs des Patentanspruchs 1.

Beim Warenumschlag hat sowohl international als auch national der Transport von Waren in Containern in den letzten Jahrzehnten eine überragende Bedeutung erlangt. Container werden sowohl auf dem Land per Bahn oder LKW, wie auch bei der Binnen- und Hochseeschifffahrt per Schiff transportiert. Ein großer Vorteil der Verwendung von Containern zum Warentransport ist, dass ein Container am Ursprungsort mit der zu transportierenden Ware beladen und am Zielort wieder ausgeladen werden kann. Während des Transports kann auf genormte Transportmittel zurückgegriffen werden, unabhängig von der Art der Ware, welche im jeweiligen Container transportiert wird.

Entsprechend wurden sowohl in Hochsee- wie auch in Binnenhäfen als auch im Inland große Containerterminals gebaut, welche einen entsprechenden Warenumschlag mittels der Container zulassen.

Ein Containerterminal ist z.B. in der WO 98/35892 A1 beschrieben. Bei diesem Containerterminal ist vorgesehen, dass die Container mittels LKW zu einer Umladestation transportiert und von dort auf ein internes Containertransportsystem des Hochregallagers umgeladen werden. Dies stellt einen erheblichen Aufwand beim Ein- und Auslagern der Container dar.

Die GB 1 333 745 A beschreibt ein Containerterminal für auf Paletten gelagerte Güter. Die EP 0 518 081 A1 zeigt ein Containerterminal für rollenförmige Güter. Bei beiden Containerterminals werden schienengebundene Container-Transportfahrzeuge eingesetzt.

Aufgabe der Erfindung ist es, die Effektivität beim Einlagern von Containern in das Hochregallager und beim Auslagern von Containern aus dem Hochregallager gegenüber dem genannten Stand der Technik zu verbessern.

Hierzu sieht die Erfindung ein Containerterminal gemäß des Patentanspruchs 1 vor.

Es ist somit eine Grundidee der Erfindung, das Containerterminal so auszugestalten, dass ein ins Hochregallager einzulagernder Container vom Container-Transportfahrzeug auf der Container-Abstellfläche abgeholt und bis zum, für diesen Container vorgesehenen Regalfach im Hochregallager transportiert werden kann. Beim Auslagern eines Containers aus einem Regalfach des Hochregallagers ermöglicht die Erfindung ebenfalls, dass ein Container-Transportfahrzeug den Container vom Regalfach des Hochregallagers bis auf die Container-Abstellfläche transportiert und dort abstellt. Hierbei hat die Erfindung den Vorteil, dass bei diesem Einlager- wie auch Auslagerprozess kein Umladen des Containers mehr notwendig ist, wodurch der Betrieb des Containerterminals gegenüber dem Stand der Technik wesentlich effektiviert wird. In anderen Worten können die Container beim Einlagern vom Container-Transportfahrzeug von der Container-Abstellfläche bis zum Regalfach und beim Auslagern vom Regalfach bis zur Container-Abstellfläche transportiert werden, ohne dass zwischendurch eine Übergabe des Containers zwischen verschiedenen Transportsystemen notwendig ist. Die Erfindung sieht entsprechend vor, dass die Container-Transportfahrzeuge von der Container-Abstellfläche bis zum Regalfach und umgekehrt fahren können.

Erfindungsgemäße Containerterminals dienen dem Umschlag von Containern. Sie könnten entsprechend auch als Containerumschlaganlagen oder Containerumladeanlagen bezeichnet werden. Sie können sowohl in Binnen- als auch in Hochseehäfen und auch im Inland zum Containerumschlag eingesetzt werden, egal ob die Container zum oder vom Containerterminal per Schiff, per Bahn oder per LKW transportiert werden.

Bei erfindungsgemäßen Containerterminals kommt eine Vielzahl von Container-Transportfahrzeugen zum Einsatz. Eine Vielzahl ist in diesem Zusammenhang im Sinne von "mehrere" zu verstehen. Die kleinste Anzahl wären somit zwei Container-Transportfahrzeuge. In der Praxis werden in einem erfindungsgemäßen Containerterminal aber wesentlich mehr Container-Transportfahrzeuge eingesetzt werden.

Bei der Container-Abstellfläche handelt es sich um eine Fläche außerhalb des Hochregallagers, welche so viel Platz bietet, dass Container, vorzugsweise eine Vielzahl von Containern, dort abgestellt werden können und trotzdem noch genug Platz vorhanden ist, dass die Container-Transportfahrzeuge zu verschiedenen Abstellplätzen hin fahren können, um dort Container abzustellen oder abzuholen. Es handelt sich bei der Container-Abstellfläche in der Regel um eine ebene Freifläche, welche sich günstigerweise in unmittelbarer Umgebung des Hochregallagers befindet. Oft wird es sich bei der Container- Abstellfläche um eine Art Vorplatz vor dem Hochregallager handeln. Dieser kann sich in Hafenanlagen z.B. in einem Bereich zwischen dem Hochregallager und einem Schiffsanleger mit den entsprechenden Containerladekränen befinden. Bei erfindungsgemäßen Containerterminals mit Bahnanschluss kann sich die Container-Abstellfläche z.B. zwischen der Gleisanlage und dem Hochregallager befinden. Natürlich können erfindungsgemäße Containerterminals auch mehrere Hochregallager und mehrere voneinander räumlich getrennte Container-Abstellflächen umfassen.

Das Hochregallager erfindungsgemäßer Containerterminals kann sowohl als eine nach außen hin offene, gerüstartige Struktur als auch als ein mit Außenwänden und/oder einem Dach versehenes Gebäude ausgeführt sein. Es kann aus Stahl, Stahlbeton, aus Steher- oder Plattensystemen oder auch aus Verbundmaterialien gefertigt werden.

Der Einsatz von Hochregallagern bei erfindungsgemäßen Containerterminals erlaubt eine gute Flächennutzung. Außerdem haben die Hochregallager den Vorteil, dass für jeden Container ein eigenes Regalfach vorgesehen ist, in das ein Container eingelagert oder aus dem er auch wieder ausgelagert werden kann, ohne dass hierfür ein Umstapeln von Containern oder dergleichen notwendig ist. Dies ist ein wesentlicher Vorteil der Verwendung eines Hochregallagers gegenüber dem einfachen Aufeinanderstapeln von Containern, wie es beim Stand der Technik durchaus auch üblich ist. Innerhalb des Hochregallagers befindet sich in jeder Lageretage zumindest ein, mit den Container-Transportfahrzeugen befahrbarer Fahrweg, welcher zu den Regalfächern dieser Lageretage führt. Vorzugsweise handelt es sich in einer Lageretage um mehrere, vorzugsweise parallel zueinander angeordnete, Fahrwege neben und zwischen denen die Regalfächer der jeweiligen Lageretage angeordnet sind. Die Fahrwege könnten auch als Fahrbahnen bezeichnet werden. Es handelt sich dabei jeweils um einen Weg, auf dem ein Containerfahrzeug fahren kann. Die Fahrwege in den Lageretagen können entsprechend als straßenartig in sich geschlossene Flächen ausgebildet sein. Es ist im Sinne der Materialeinsparungen aber auch möglich, die Fahrwege so minimalistisch wie möglich auszugestalten, sodass sie z.B. nur so breit sind, dass die Räder der Transportfahrzeuge auf ihnen Platz finden.

Ein weiterer wesentlicher Vorteil erfindungsgemäßer Containerterminals besteht darin, dass sie in Abhängigkeit der Menge der pro Zeiteinheit umzuschlagenden Container sehr frei skalierbar sind. Durch die Anzahl und Größe des oder der Hochregallager eines Containerterminals bzw. durch die Anzahl der Regalfächer pro Hochregallager wie auch durch die Anzahl der Container-Transportfahrzeuge sind erfindungsgemäße Containerterminals in ihrer Größe und Leistungsfähigkeit nahezu beliebig an die zu erwartende Menge der umzuschlagenden Container anpassbar.

Ein weiterer Vorteil erfindungsgemäßer Containerterminals besteht darin, dass sie, falls sich die Anzahl der pro Zeiteinheit umzuschlagenden Container verändert, auch relativ einfach in ihrer Kapazität angepasst werden können, z.B. indem man zusätzliche Container-Transportfahrzeuge hinzunimmt oder übrige Container-Transportfahrzeuge aus dem System heraus nimmt oder die Größe und Anzahl der Hochregallager bzw. der Regalfächer entsprechend anpasst. Ändern sich die Anforderungen in einem erfindungsgemäßen Containerterminal, so ist dies also später ohne weiteres erweiterbar aber auch verkleinerbar.

Bei den Containern handelt es sich um Behälter, in denen Waren gelagert und transportiert werden können. Bei erfindungsgemäßen Containerterminals werden sogenannte ISO-Container gemäß ISO Norm 668 eingesetzt, welche heutzutage als Standard im nationalen wie auch internationalen Warenumschlag verwendet werden. Diese ISO-Container werden häufig auch als Schiffscontainer bezeichnet. Übliche Größen sind sogenannte 20-Fuß-, 30-Fuß-, 40-Fuß- und 45-Fuß-Container. Für diese sind erfindungsgemäße Containerterminals besonders gut geeignet.

Eine Zu- und Abfahrtvorrichtung eines erfindungsgemäßen Containerterminals ist eine Vorrichtung, die es erlaubt, dass ein Container-Transportfahrzeug mit oder ohne Container von einem Fahrweg in einer Lageretage des Hochregallagers zur Container-Abstellfläche gelangt oder umgekehrt. Es kann sich bei der Zu- und/oder Abfahrtvorrichtung z.B. um eine mit den Container-Transportfahrzeugen befahrbare Rampe handeln. Als Alternative kann eine Zu- und Abfahrtvorrichtung auch als ein Aufzug für die Container-Transportfahrzeuge ausgebildet sein. Günstigerweise sind in einem erfindungsgemäßen Containerterminal mehrere solche Zu- und Abfahrtvorrichtungen vorhanden, welche gleichzeitig genutzt werden können. Auch hierdurch kann die Redundanz im Gesamtsystem erhöht werden, um eine sehr hohe Gesamtanlagenverfügbarkeit sicher zu stellen.

Günstige Varianten der Erfindung sehen vor, dass zumindest ein Teil der Regalfächer in der jeweiligen Lageretage entlang des Fahrweges dieser Lageretage in einer Reihe hintereinander angeordnet sind. Bevorzugt befinden sich die Regalfächer in der jeweiligen Lageretage seitlich neben dem jeweiligen Fahrweg. Besonders bevorzugt sind auf beiden Seiten eines jeweiligen Fahrweges in der jeweiligen Lageretage Regalfächer angeordnet. Bevorzugt ist auch vorgesehen, dass zumindest eine der Lageretagen zwei Fahrwege aufweist und zwischen diesen Fahrwegen und der Zu- und Abfahrtvorrichtung eine befahrbare Plattform für das Zufahren der Container-Transportfahrzeuge von der Zu- und Abfahrtvorrichtung zu den Fahrwegen dieser Lageretage und/oder für das Zufahren der Container-Transportfahrzeuge von den Fahrwegen dieser Lageretage zu der Zu- und Abfahrtvorrichtung angeordnet ist. Die Fahrwege sind dabei günstigerweise voneinander beabstandet und zueinander parallel verlaufend in der jeweiligen Lageretage angeordnet.

Neben dem Containerterminal an sich betrifft die Erfindung auch ein Verfahren zum Betrieb eines erfindungsgemäßen Containerterminals. Dabei ist vorgesehen, dass der jeweilige Container zum Einlagern in eines der Regalfächer vom Container-Transportfahrzeug auf der Container-Abstellfläche abgeholt und mit dem Container-Transportfahrzeug über die Zu- und Abfahrtvorrichtung und den jeweiligen Fahrweg der jeweiligen Lageretage bis neben das Regalfach gefahren und dann in das Regalfach eingelagert wird und/oder dass der jeweilige Container zum Auslagern aus einem der Regalfächer vom Container-Transportfahrzeug am jeweiligen Regalfach abgeholt und mit dem Container-Transportfahrzeug über den jeweiligen Fahrweg der jeweiligen Lageretage und die Zu- und Abfahrtvorrichtung zur Container-Abstellfläche gefahren und dort vom Container-Transportfahrzeug entladen wird. Günstigerweise wird der Container vom Container-Transportfahrzeug dabei auf der Container-Abstellfläche abgestellt. Besonders bevorzugt ist in diesem Zusammenhang vorgesehen, dass der jeweilige Container mittels einer Lade- und Entladevorrichtung des Container-Transportfahrzeugs auf das Container-Transportfahrzeug geladen und vom Container-Transportfahrzeug entladen wird.

Die Container-Transportfahrzeuge zum Transportieren von ISO-Containern weisen Räder und eine Lenkung zum Geradeausfahren und zum Kurvenfahren auf einem Untergrund auf. Es handelt sich bei den Container-Transportfahrzeugen also nicht um schienengebundene oder derartige Fahrzeuge. Die Container-Transportfahrzeuge können vielmehr sowohl geradeaus, rückwärts und vorwärts als auch Kurven fahren. Sie sind somit frei lenkbar. Dies erlaubt es, dass sie zu einer beliebigen Stelle auf der Container-Abstellfläche fahren, um dort einen Container abzuholen oder abzuladen bzw. abzustellen. Diese freie Navigierbarkeit der Container-Transportfahrzeuge hat auch den Vorteil, dass beim Abstellen der Container auf der Container-Abstellfläche weder seitens der Container-Transportfahrzeuge noch seitens anderer Container-Handlinggeräte, wie zum Beispiel Verladekränen oder dergleichen, irgendwelche Positioniervorgaben beachtet werden müssen. Die Container können vielmehr an beliebiger Stelle auf dem Untergrund abgestellt und dort auch wieder abgeholt werden. Auch dies führt zu einer Beschleunigung des Gesamtsystems.

Das Container-Transportfahrzeug fährt auf seinen Rädern und ist mittels der Lenkung frei lenkbar. Die Räder sind in der Regel zumindest paarweise auf Radachsen angeordnet. Es kann dabei eine einzelne Radachse des Container-Transportfahrzeugs mittels der Lenkung lenkbar sein. Es ist aber auch genauso denkbar, mehrere oder alle Räder und/oder Radachsen des Container-Transportfahrzeugs lenkbar auszugestalten.

Wie oben bereits ausgeführt, ist vorgesehen, dass die Container-Transportfahrzeuge dazu in der Lage sind, Container selbst, also ohne fremde Hilfsmittel aufzuladen und abzuladen, und dies sowohl auf der Container-Abstellfläche als auch im Hochregallager. In diesem Sinne ist also günstigerweise vorgesehen, dass die Container-Transportfahrzeuge jeweils eine Lade- und Entladevorrichtung zum Laden zumindest eines Containers auf das Container-Transportfahrzeug und zum Entladen des zumindest einen Containers vom Container-Transportfahrzeug aufweisen.

Bevorzugt ist vorgesehen, dass das Container-Transportfahrzeug ein erstes Fahrzeugteil mit einem ersten Teil der Räder und ein zweites Fahrzeugteil mit einem zweiten Teil der Räder und eine Traverse aufweist, wobei die Fahrzeugteile vorzugsweise ausschließlich mittels der Traverse miteinander verbunden sind und unterhalb der Traverse und zwischen den Fahrzeugteilen ein Container-Aufnahmeraum zur Aufnahme zumindest eines Containers ausgebildet ist. Besonders bevorzugt ist dabei, bezogen auf eine Richtung des Geradeausfahrens des Container-Transportfahrzeugs, vorgesehen, dass das erste Fahrzeugteil vor und das zweite Fahrzeugteil hinter dem Container-Aufnahmeraum angeordnet sind. Der Container-Aufnahmeraum ist günstigerweise zum Laden und Entladen des zumindest einen Containers zu zumindest einer Seite, vorzugsweise zu beiden Seiten hin offen. Die Begriffe zur Seite hin bzw. seitlich sind immer in Bezug auf die Richtung des Geradeausfahrens des Container-Transportfahrzeugs zu verstehen.

Besonders bevorzugt ist vorgesehen, dass die Lade- und Entladevorrichtung des Container-Transportfahrzeugs bezogen auf die Richtung des Geradeausfahrens zum Laden zumindest eines seitlich neben dem Container-Fahrzeug stehenden Containers in den Container-Aufnahmeraum und zum Entladen des Containers aus dem Container-Aufnahmeraum auf eine Seite neben dem Container-Transportfahrzeug ausgebildet ist. In anderen Worten ist günstigerweise vorgesehen, dass die Container-Transportfahrzeuge jeweils eine Richtung des Geradeausfahrens aufweisen und die Lade- und Entladevorrichtung des jeweiligen Container-Transportfahrzeugs bezogen auf die Richtung des Geradeausfahrens zum Laden zumindest eines seitlich neben dem Container-Transportfahrzeug stehenden Containers auf das Container-Transportfahrzeug und zum Entladen des zumindest einen Containers vom Container-Transportfahrzeug auf eine Seite neben dem Container-Transportfahrzeug ausgebildet ist. Besonders bevorzugt ist dabei vorgesehen, dass die Lade- und Entladevorrichtung ein Laden eines Containers von beiden Seiten des Container-Transportfahrzeugs und entsprechend ein Entladen des Containers auf beide Seiten des Container-Transportfahrzeugs zulässt.

Um die beim Be- und Entladevorgang auftretenden Kräfte abzustützen, ist günstigerweise vorgesehen, dass das Container-Transportfahrzeug zumindest eine aus- und einfahrbare Seitenstütze zum, bezogen auf die Richtung des Geradeausfahrens, seitlichen Abstützens des Container-Transportfahrzeugs aufweist. Es kann sich dabei um verschiedene Arten von Seitenstützen handeln. Sie können dazu vorgesehen sein, dass sich das Container-Transportfahrzeug mit ihnen auf einem Untergrund abstützt. Solche Seitenstützen kommen vor allem dann zum Einsatz, wenn ein Container auf der Container-Abstellfläche des Containerterminals auf das Container-Transportfahrzeug aufgeladen oder von diesem entladen wird. Für den Vorgang des Ein- und Auslagerns von Containern in oder aus den Regalfächern des Hochregallagers kann das Container-Transportfahrzeug aber auch solche Seitenstützen aufweisen, mit denen es sich an entsprechenden Abstützflächen im Hochregallager seitlich abstützt. Besonders bevorzugt weist das Container-Transportfahrzeug beide Arten von Seitenstützen auf.

Um die einzelnen Lageretagen im Hochregallager möglichst flach ausbilden zu können, ist günstigerweise vorgesehen, dass die Container-Transportfahrzeuge nicht viel höher gebaut sind, als die zu transportierenden Container. In diesem Sinne ist günstigerweise vorgesehen, dass der in vertikaler Richtung gemessene Abstand einer Unterkante der Traverse von einem ebenen Untergrund, auf dem das Container-Transportfahrzeug mit seinen Rädern steht, maximal 3,30 m, vorzugsweise maximal 2,90 m, beträgt. Dies ist auch ein wesentlicher Unterschied bevorzugter Ausgestaltungsformen von Container-Transportfahrzeugen zu sogenannten, beim Stand der Technik bekannten Portalhubwagen oder straddle carriers, welche deutlich höher gebaut sind, um auch mehrere Container auf einer Abstellfläche übereinander stapeln zu können.

Das Container-Transportfahrzeug ist günstigerweise längserstreckt ausgebildet. Es weist also, vorzugsweise in allen Betriebszuständen des Container-Transportfahrzeugs, eine Länge auf, die größer ist als die Breite und als die Höhe des Container-Transportfahrzeugs.

Wie eingangs bereits erläutert, ist es beim Containerumschlag heutzutage bei ISO-Containern üblich, verschieden lange Typen in ein und demselben Containerterminal umzuschlagen. Um dies zu gewährleisten, können bei der Erfindung grundsätzlich unterschiedlich lange Container-Transportfahrzeuge zum Einsatz kommen. Der Containeraufnahmeraum eines Container-Transportfahrzeugs kann dabei eine, an eine gewisse Containerlänge angepasste, fixe Länge aufweisen. In diesem Sinne würde das Containerterminal dann eben verschieden lange Container-Transportfahrzeuge umfassen, um auch verschieden lange Container ins Hochregallager und aus dem Hochregallager ein- und auslagern zu können.

Um mit einem einzelnen Container-Transportfahrzeug aber auch verschieden lange Container transportieren bzw. ein- und auslagern zu können, ist das Container-Transportfahrzeug in bevorzugten Varianten in sich längenverstellbar ausgebildet. Es ist also günstigerweise vorgesehen, dass die Traverse zur Anpassung der Länge des Container-Aufnahmeraums an verschieden lange Container in einer Längserstreckungsrichtung der Traverse längenverstellbar ausgebildet ist. Bei diesen Varianten ist somit vorgesehen, durch Änderung der Länge der Traverse und damit auch des Abstands zwischen den Fahrzeugteilen die Länge des Container-Aufnahmeraums an die Länge des jeweils zu transportierenden Containers anpassen zu können. Die Traverse ist hierzu günstigerweise teleskopartig ausgebildet.

Der Vollständigkeit halber wird an dieser Stelle darauf hingewiesen, dass bei den Container-Transportfahrzeugen der Container- Aufnahmeraum und/oder die Lade- und Entladevorrichtung jeweils für das Laden eines einzigen Containers in den Container-Aufnahmeraum ausgebildet sein können. Es ist aber auch denkbar, mehr als einen, also z.B. zwei, Container gleichzeitig in einen Container-Aufnahmeraum eines einzelnen Container-Transportfahrzeugs einzuladen, wenn man die Länge des Container-Aufnahmeraums und die Lade- und Entladevorrichtung des Container-Transportfahrzeugs entsprechend ausgestaltet. Besonders bevorzugt werden die zwei oder mehreren Container dann, in Richtung des Geradeausfahrens des Container-Transportfahrzeugs gesehen, hintereinander in den Container-Aufnahmeraum eingelagert.

Grundsätzlich ist denkbar, dass die Container-Transportfahrzeuge ähnlich wie handelsübliche LKW's von Personen gefahren und gelenkt werden. Besonders bevorzugte Ausgestaltungsformen der Erfindung sehen aber einen höheren Grad der Automatisierung vor. Besonders bevorzugt ist in diesem Zusammenhang vorgesehen, dass die Container-Transportfahrzeuge selbstfahrend ausgebildet sind.

Selbstfahrende Transportfahrzeuge sind beim Stand der Technik an sich bekannt, sodass bezüglich der selbstfahrenden Eigenschaften der Container-Transportfahrzeuge auf beim Stand der Technik an sich bekannte Technologien zurückgegriffen werden kann. Es kann sich dabei um Containerterminal interne Navigationssysteme, aber auch um GPS-Systeme und dergleichen handeln. Es wäre z.B. auch denkbar, RFID- Technologie im Hochregallager und in der Container-Abstellfläche zu verbauen, um mit deren Hilfe die Container-Transportfahrzeuge zu navigieren. Hierbei kann auf all die Entwicklungen zurückgegriffen werden, die beim Stand der Technik für selbstfahrende Fahrzeuge an sich bereits bekannt sind. So ist es heutzutage durchaus üblich, in firmeninternen Lagersystemen selbstfahrende Fahrzeuge einzusetzen.

Container-Transportfahrzeuge von erfindungsgemäßen Containerterminals können sowohl Verbrennungsmotoren als auch Elektromotoren für ihren Antrieb aufweisen. Es kann sich um akkubetriebene Elektromotoren aber z.B. auch um solche handeln, die mittels Wasserstoff und Brennstoffzellen betrieben werden. Auch die Energieversorgung über Induktionsschleifen oder dergleichen ist denkbar. Es können auch an verschiedenen Stellen innerhalb des Containerterminals Ladestationen vorgesehen sein, an denen die Akkumulatoren der Container-Transportfahrzeuge wieder aufgeladen werden können. Bei Verbrennungsmotoren sind alle an sich bekannten Brennstoffformen denkbar, wie z.B. Diesel und Benzin oder auch Gas, wie z.B. Erdgas oder Wasserstoff.

In bevorzugten Varianten ist vorgesehen, dass sowohl das Fahren als auch das Auf- und Abladen der Container bei den Container-Transportfahrzeugen vollautomatisch erfolgt. Die Container-Transportfahrzeuge können dabei drahtlos von einer Fahrzeugsteuerzentrale aus fernsteuerbar ausgebildet sein. Es kann vorgesehen sein, dass die Daten- und Informationsverarbeitung zentral in der Fahrzeugsteuerzentrale erfolgt und die Container-Transportfahrzeuge ausschließlich ferngesteuert werden. Es ist aber auch genauso gut denkbar, dass zumindest ein Teil der Steuer- und Regelleistung in die einzelnen Container-Transportfahrzeuge verlagert wird. Insbesondere bei diesen Varianten ist günstigerweise vorgesehen, dass die Container-Transportfahrzeuge untereinander drahtlos kommunizieren können. Es kann eine Art Schwarmintelligenz der Container-Transportfahrzeuge aufgebaut werden, um die Gesamtaufgabe des Ein- und Auslagerns der verschiedenen Container gesamtheitlich zu lösen.

Bezugnehmend auf die Variante der selbstfahrenden Container-Transportfahrzeuge ist darauf hinzuweisen, dass diese so ausgebildet werden können, dass das erste und das zweite Fahrzeugteil baugleich ausgebildet sind. Bei solchen Container-Transportfahrzeugen kann es also so sein, dass, anders als z.B. bei einem Container-Transportfahrzeug mit einer Fahrerkabine, das Vorne und das Hinten nicht mehr voneinander unterscheidbar sind. Dies ändert aber nichts daran, dass es eine Richtung des Geradeausfahrens des Container-Transportfahrzeuges und eine Anordnung der Fahrzeugteile vor und hinter dem Container- Aufnahmeraum gibt.

Auf die Lade- und Entladevorrichtung zurückkommend sehen bevorzugte Varianten der Erfindung vor, dass die Lade- und Entladevorrichtung des Container-Transportfahrzeugs zumindest zwei, bezogen auf die Richtung des Geradeausfahrens, seitlich, vorzugsweise beidseitig seitlich, aus- und einfahrbare und in vertikaler Richtung anhebbare und absenkbare Container-Tragelemente aufweist, wobei die Container-Tragelemente jeweils zumindest ein Greifelement, vorzugsweise zumindest zwei Greifelemente, zum Befestigen der Container-Tragelemente an dem Container, vorzugsweise an Eckbeschlägen des Containers, aufweisen und der mittels der Greifelemente befestigte Container zum Laden auf das Container-Transportfahrzeug mittels der Container-Tragelemente vom Untergrund abhebbar und seitlich in den Container-Aufnahmeraum einfahrbar und zum Entladen vom Container-Transportfahrzeug seitlich aus dem Container-Aufnahmeraum ausfahrbar und auf den Untergrund absenkbar oder in anderen Worten abstellbar ist. Bei dem Untergrund kann es sich sowohl um eine Boden- bzw. eine Geländeoberfläche der Container-Abstellfläche als auch um den Boden eines Regalfachs handeln.

Um möglichst kleine Kurvenradien mit dem Container-Transportfahrzeug realisieren zu können, sieht eine spezielle Ausgestaltungsform vor, dass die, vorzugsweise alle, Räder des Container-Transportfahrzeugs mittels der Lenkung bezogen auf die Richtung des Geradeausfahrens um zumindest 90° um eine jeweilige vertikale Achse drehbar sind. Dies kann für zwei Dinge genutzt werden. Zum einen kann das Container-Transportfahrzeug hierdurch auf sehr kleinen und engen Bereichen gefahren werden, z.B. auf entsprechend kleinen Plattformen zwischen den Fahrwegen und der Zu- und Abfahrtvorrichtung des Containerterminals. Zum anderen kann diese spezielle Art der Lenkbarkeit des Container-Transportfahrzeugs aber auch für den Lade- und Entladevorgang eines Containers genutzt werden. Die Möglichkeit des Lenkens um zumindest 90° gegenüber der Richtung des Geradeausfahrens erlaubt es auch, das Container-Transportfahrzeug beim Ladevorgang zunächst neben den zu ladenden Container zu fahren und dann mit um 90° gegenüber der Richtung des Geradeausfahrens gedrehten Rädern über den noch auf dem Untergrund stehenden Container zu fahren, um ihn dann entsprechend aufzunehmen. Entsprechendes gilt dann für den Abladevorgang. Bei solchen Ausgestaltungsformen ist jedenfalls günstigerweise vorgesehen, dass die Lade- und Entladevorrichtung des Container-Transportfahrzeugs zumindest zwei, in vertikaler Richtung anhebbare und absenkbare Container-Tragelemente aufweist, wobei die Container-Tragelemente jeweils zumindest ein Greifelement, vorzugsweise zumindest zwei Greifelemente, zum Befestigen des Container-Tragelements an dem Container, vorzugsweise an Eckbeschlägen des Containers, aufweisen.

Weitere Merkmale und Einzelheiten bevorzugter Ausgestaltungsformen der Erfindung werden nachfolgend exemplarisch anhand der Figurenbeschreibung erläutert. Es zeigen:
Fig. 1 bis 4 schematische Darstellungen verschiedener erfindungsgemäßer Ausgestaltungsformen von Containerterminals;
Fig. 5 eine vergrößerte Schnittdarstellung im Bereich eines Fahrwegs einer Lageretage;
Fig. 6 den Bereich Z aus Fig. 5 vergrößert;
Fig. 7 bis 34 verschiedene Darstellungen zu einem ersten Ausführungsbeispiel eines Container-Transportfahrzeugs für erfindungsgemäße Containerterminals;
Fig. 35 bis 37 Darstellungen zu Abwandlungsformen dieses ersten Ausführungsbeispiels des Container-Transportfahrzeugs;
Fig. 38 bis 47 Darstellungen zu einer weiteren Version eines Container-Transportfahrzeugs für ein erfindungsgemäßes Containerterminal und
Fig. 48 eine Abwandlungsform des Ausführungsbeispiels gemäß der Fig. 38 bis 47.

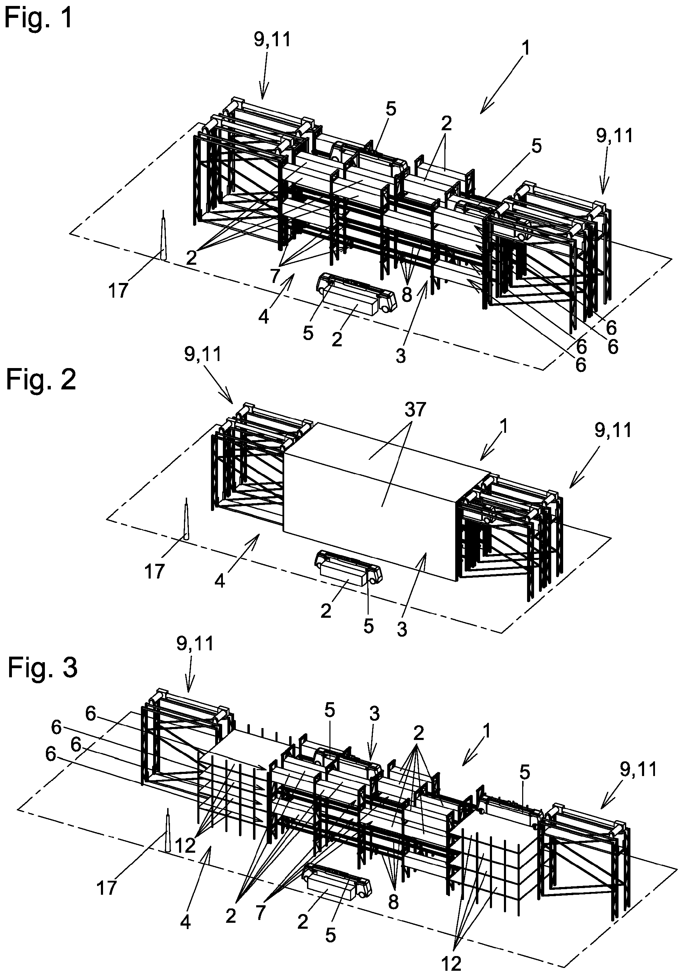

Die in Fig. 1 gezeigte erste Variante eines erfindungsgemäßen Containerterminals 1 umfasst ein Hochregallager 3 und eine außerhalb des Hochregallagers 3 angeordnete Container-Abstellfläche 4. Diese Container-Abstellfläche 4 kann z.B. an einen Liegeplatz für ein Containerschiff oder die Gleisanlage eines Container-Verladebahnhofs angrenzen. Die Kräne, mit denen die Container 2 von einem Schiff, vom Eisenbahnwagen oder auch von LKW's abgeladen und auf der Container-Abstellfläche 4 abgestellt werden können, sind hier nicht dargestellt. Diesbezüglich können aber alle derartigen, beim Stand der Technik an sich bekannten Technologien zum Einsatz kommen.

Bei den Containern 2 kann es sich um sogenannte ISO-Container verschiedener Längen, also z.B. um 20-Fuß-, 30-Fuß-, 40-Fuß- und 45-Fuß- Container gemäß der ISO-Norm 668 handeln.

Das Hochregallager 3 weist mehrere, hier in diesem Ausführungsbeispiel 4 vier, übereinander angeordnete Lageretagen 6 auf. In jeder Lageretage 6 gibt es eine Vielzahl von Regalfächern 7 zur Aufnahme von zumindest je einem der Container 2. In jeder Lageretage 6 sind zwischen den Regalfächern 7 mit den Container-Transportfahrzeugen 5 befahrbare Fahrwege 8 angeordnet. Auf diesen Fahrwegen 8 können die Container-Transportfahrzeuge 5 bis neben das jeweilige Regalfach 7 fahren, um dort einen Container 2 einzulagern oder einen Container aus diesem Regalfach 7 zu entnehmen. Die Fahrwege 8 im Hochregallager 3 sind mit der Container-Abstellfläche 4 über Zu- und Abfahrtvorrichtungen 9 verbunden, welche mit den Container-Transportfahrzeugen 5 befahrbar sind. Im ersten Ausführungsbeispiel gemäß Fig. 1 handelt es sich bei den Zu- und Abfahrtvorrichtungen 9 um Aufzüge 11. In diese Aufzüge 11 können die Container-Transportfahrzeuge von der Container-Abstellfläche 4 kommend hineinfahren. Der jeweilige Aufzug 11 transportiert dann das jeweilige Container-Transportfahrzeug 5 zu dem Fahrweg 8 derjenigen Lageretage 6, den das Container-Transportfahrzeug 5 dann entlang fahren muss, um zum jeweiligen Regalfach 7 zu gelangen. Der Rückweg vom Regalfach 7 zur Container-Abstellfläche 4 erfolgt dann andersherum ebenfalls wieder über einen der Aufzüge 11. Wie hier auch dargestellt, ist es im Sinne eines möglichst effizienten und auch redundanten Betriebs sinnvoll, dass das Hochregallager 3 und seine Fahrwege 8 über mehrere Zu- und Abfahrtvorrichtungen 9, also im ersten Ausführungsbeispiel Aufzüge 11, erreichbar sind. Hierdurch können relativ schnell relativ viele Container-Transportfahrzeuge 5 zu den jeweiligen Fahrwegen 8 angehoben oder von diesen wieder auf das Niveau der Container-Abstellfläche 4 abgesenkt werden. Außerdem bleibt das Containerterminal 1 auch dann betriebsbereit, wenn einer der Aufzüge 11 ausfallen sollte.

Wie eingangs bereits erläutert, kann die Größe des Hochregallagers bzw. die Anzahl der Regalfächer 7 und die Anzahl der in diesem Containerterminal 1 eingesetzten Container-Transportfahrzeuge 5 an die Menge der pro Zeiteinheit ein- und auszulagernden Container 2 relativ frei skalierbar angepasst werden. Es kann gleichzeitig eine Vielzahl von Container-Transportfahrzeugen 5 Container 2 entweder auf der Container-Abstellfläche 4 abholen, aufladen und zu dem jeweils vorgesehenen Regalfach 7 transportieren und dort einlagern oder eben auf dem umgekehrten Weg transportieren. Grundsätzlich ist es denkbar, die Container-Transportfahrzeuge 5 so z.B. mit Fahrerkabinen auszugestalten, dass sie von Personen gefahren bzw. gesteuert werden. Bevorzugte Varianten der Erfindung sehen aber, wie eingangs bereits erläutert, vor, dass die Container-Transportfahrzeuge 5 selbstfahrend ausgebildet sind. Die Steuerung des Ein- und Auslagerungsprozesses übernimmt dann günstigerweise zumindest zum Teil eine Fahrzeugsteuerzentrale 17, welche hier als ein einfacher Funkmast symbolisch dargestellt ist. Zu den verschiedenen Möglichkeiten, wie auf diese Art und Weise der Ein- und Auslagerungsprozess der Container 2 mittels der Container-Transportfahrzeuge 5 automatisiert bzw. vollständig automatisiert werden kann, wurde bereits weiter oben eingegangen.

Während es sich bei der Variante gemäß Fig. 1 um ein nach außen hin offenes, gerüstartig aufgebautes Hochregallager 3 handelt, zeigt Fig. 2 eine Variante, bei der das Hochregallager 3 eine Außenhülle 37 bestehend aus Außenwänden und einem Dach aufweist. Dies soll veranschaulichen, dass das Hochregallager 3 natürlich auch als eine Art Gebäude ausgeführt sein kann. Auch Mischformen z.B. nur mit Außenwänden oder nur mit einem Dach sind denkbar.

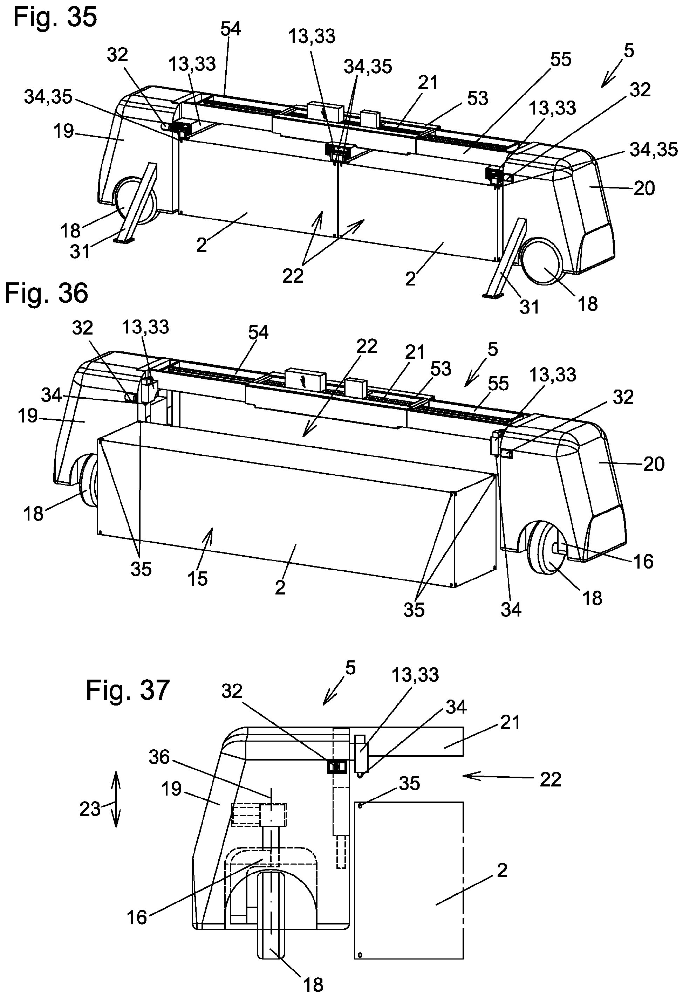

Fig. 3 zeigt eine Variante eines erfindungsgemäßen Containerterminals 1 bei der zwischen den wiederum jeweils als Aufzug 11 ausgebildeten Zu- und Abfahrtvorrichtung 9 und den Fahrwegen 8 jeweils eine mit den Container-Transportfahrzeugen 5 befahrbare Plattform 12 ausgebildet ist. Dabei sind in diesem Ausführungsbeispiel gemäß Fig. 3 in jeder Lageretage 6 zwei stirnseitig an die Fahrwege 8 der jeweiligen Lageretage 6 anschließende Plattformen 12 ausgebildet. Diese Plattformen 12 dienen dazu, dass die Container-Transportfahrzeuge 5 von der jeweiligen Zu- und Abfahrtvorrichtung 9 kommend zu allen Fahrwegen 8 der jeweiligen Lageretage 6 fahren können und umgekehrt. Um die Plattformen 12 so klein und platzsparend wie möglich ausführen zu können, kann vorgesehen sein, dass wie weiter hinten anhand der Fig. 36 und 37 noch erläutert, die Räder 18 des jeweiligen Container-Transportfahrzeugs 5 mittels der Lenkung 16 bezogen auf die Richtung des Geradeausfahrens 14 um zumindest 90° um die jeweilige vertikale Achse 36 drehbar sind.

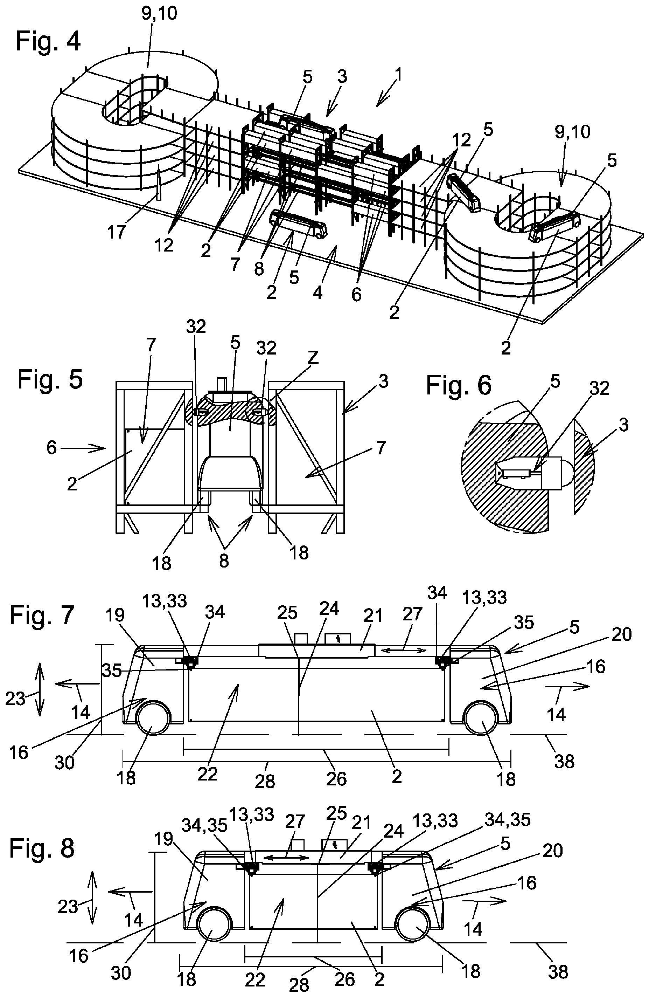

Fig. 4 zeigt nun noch eine Variante, bei der die Zu- und Abfahrtvorrichtungen 9 nicht als Aufzug 11 sondern jeweils als Rampe 10 ausgeführt sind. Über diese Rampen 10 und die daran anschließenden Plattformen 12 hinweg können die Container-Transportfahrzeuge 5 zum jeweiligen Fahrweg 8 der jeweiligen Lageretage 6 und in umgekehrter Richtung vom jeweiligen Fahrweg 8 zur Container- Abstellfläche 4 fahren, wie dies in Fig. 4 auch dargestellt ist. Über die Rampen 10 sind in diesem Ausführungsbeispiel alle Lageretagen 6 und deren Fahrwege 8 erreichbar.

In allen Ausführungsvarianten der Fig. 1 bis 4 sind die Regalfächer 7 in den jeweiligen Lageretagen 6 entlang der jeweiligen Fahrwege 8 in Reihen hintereinander angeordnet. Die Regalfächer 7 befinden sich seitlich neben dem jeweiligen Fahrweg 8. Besonders günstig ist es, wie hier auch dargestellt, wenn sich auf beiden Seiten des jeweiligen Fahrweges 8 jeweils Regalfächer 7 zum Ein- und Auslagern der Container 2 befinden.

Fig. 5 zeigt vergrößert einen Vertikalschnitt durch das Hochregallager 3 im Bereich eines Fahrwegs 8 in einer Lageretage 6. Dargestellt ist ein Container-Transportfahrzeug 5, welches gerade auf dem Fahrweg 8 steht, sodass es entweder einen Container 2 in das leere, rechts neben ihm befindliche Regalfach 7 einlagern oder den, bereits in das links neben ihm befindliche Regalfach 7 eingelagerten Container 2 von dort entnehmen und zur Container-Abstellfläche 4 zurücktransportieren kann. Wie in Fig. 5 dargestellt, kann der Fahrweg 8 sehr minimalistisch ausgebildet sein. Er muss letztendlich nur den Rädern 18 des Container-Transportfahrzeugs 5 ausreichende Abstützfläche bieten. Natürlich sind alternativ auch in sich straßenartig geschlossene Fahrwege 8 möglich. In Fig. 5 ist das Container-Transportfahrzeug 5 im Bereich der Seitenstützen 32 teilweise geschnitten dargestellt. Fig. 6 zeigt den Bereich Z aus Fig. 5 vergrößert. Dort ist gut zu sehen, dass bevorzugte Ausgestaltungsformen der Container-Transportfahrzeuge 5 über ein- und ausfahrbare Seitenstützen 32 verfügen, mit denen sie sich beim seitlichen Auf- und Abladen der Container 2 am Hochregallager 3 abstützen können. In den Fig. 5 und 6 und in den nachfolgend noch erläuterten Darstellungen zu den verschiedenen Container-Transportfahrzeugen 5 sind diese Seitenstützen 32 jeweils als in das Container-Transportfahrzeug 5 einfahrbare und aus diesem ausfahrbare Stützstempel realisiert. Natürlich wäre es auch denkbar, entsprechende Seitenstützen nicht im Container-Transportfahrzeug 5 sondern alternativ im Hochregallager 3 an den entsprechenden Stellen vorzusehen.

Nachfolgend wird anhand der Fig. 7 bis 34 ein erstes Ausführungsbeispiel eines Container-Transportfahrzeugs 5 beschrieben, welches bei erfindungsgemäßen Containerterminals 1 eingesetzt werden kann. Die Fig. 7 und 8 zeigen zunächst eine Seitenansicht des schematisch dargestellten Container-Transportfahrzeugs 5. Das Container-Transportfahrzeug 5 weist Räder 18 und eine Lenkung 16 auf. Mit diesen Rädern 18 und der Lenkung 16 kann es auf einem Untergrund 38 sowohl geradeaus als auch um Kurven fahren. Es ist somit frei lenkbar und nicht schienengebunden oder dergleichen. Die Richtung des Geradeausfahrens 14 ist in den Fig. 7, 8, 11, 13, 15, 19 und 21 eingezeichnet. Das Container-Transportfahrzeug 5 weist ein erstes Fahrzeugteil 19 mit einem ersten Teil der Räder 18 und ein zweites Fahrzeugteil 20 mit einem zweiten Teil der Räder 18 auf. Das erste Fahrzeugteil 19 und das Fahrzeugteil 20 sind mittels einer Traverse 21 miteinander verbunden. Unterhalb der Traverse 21 und zwischen den Fahrzeugteilen 19 und 20 befindet sich der Container-Aufnahmeraum 22. In diesem ersten Ausführungsbeispiel ist das Container-Transportfahrzeug 5 zur Aufnahme eines einzelnen Containers 2 konfiguriert. Weiter hinten werden aber auch andere Ausführungsbeispiele beschrieben, bei denen ein einzelnes Container-Transportfahrzeug 5 mehr als einen Container 2 gleichzeitig aufnehmen kann.

Zur Aufnahme des Containers 2 weist das Container-Transportfahrzeug 5 eine Lade- und Entladevorrichtung 13 auf. Diese ermöglicht es, dass das Container-Transportfahrzeug 5 selbstständig und ohne weitere Hilfestellung einen Container 2 aufladen und auch wieder abladen kann. Bezogen auf die Richtung des Geradeausfahrens 14 ist das erste Fahrzeugteil 19 vor und das zweite Fahrzeugteil 20 hinter dem Container-Aufnahmeraum 22 angeordnet. Der Container-Aufnahmeraum 22 ist zum Laden und zum Entladen des zumindest einen Containers 2 in diesem Ausführungsbeispiel wie auch in anderen bevorzugten Varianten zu beiden Seiten 15 hin offen.

Das Container-Transportfahrzeug 5 ist, wie hier auch dargestellt, bevorzugt längserstreckt ausgebildet. Dies bedeutet, dass seine Länge 28 größer als seine Breite 29 und seine Höhe 30 ist. Die Höhe 30 wird dabei in vertikaler Richtung 23 von der Unterkante der Räder 18 bis zur maximalen Höhenerstreckung des Container-Transportfahrzeugs 5 gemessen.

Im Gegensatz zu beim Stand der Technik an sich bekannten Portalhubwagen ist das Container-Transportfahrzeug 5, wie hier auch realisiert, günstigerweise möglichst flach gebaut, damit die Lageretagen 6 des Hochregallagers 3 auch nicht unnötig hoch ausgeführt werden müssen. Der in vertikaler Richtung 23 gemessene Abstand 24 der Unterkante 25 der Traverse 21 von dem ebenen Untergrund 38, auf dem das Container-Transportfahrzeug 5 mit seinen Rädern 18 steht, beträgt, wie eingangs bereits erläutert, günstigerweise maximal 3,30 m, vorzugsweise maximal 2,90 m.

Grundsätzlich ist es denkbar, dass die Container-Transportfahrzeuge 5 mit einer fixen Länge 28 und damit auch mit einer fixen Länge 26 des Container-Aufnahmeraums 22 ausgebildet werden. Dann sind sie in der Regel eben nur zum Aufnehmen eines Containertyps einer gewissen Länge geeignet. In solchen Fällen kann, wenn unterschiedlich lange Container 2 ins Hochregallager 3 eingelagert und aus diesem ausgelagert werden sollen, vorgesehen sein, dass das Containerterminal 1 eben eine Flotte mit unterschiedlich langen Container-Transportfahrzeugen 5 umfasst.

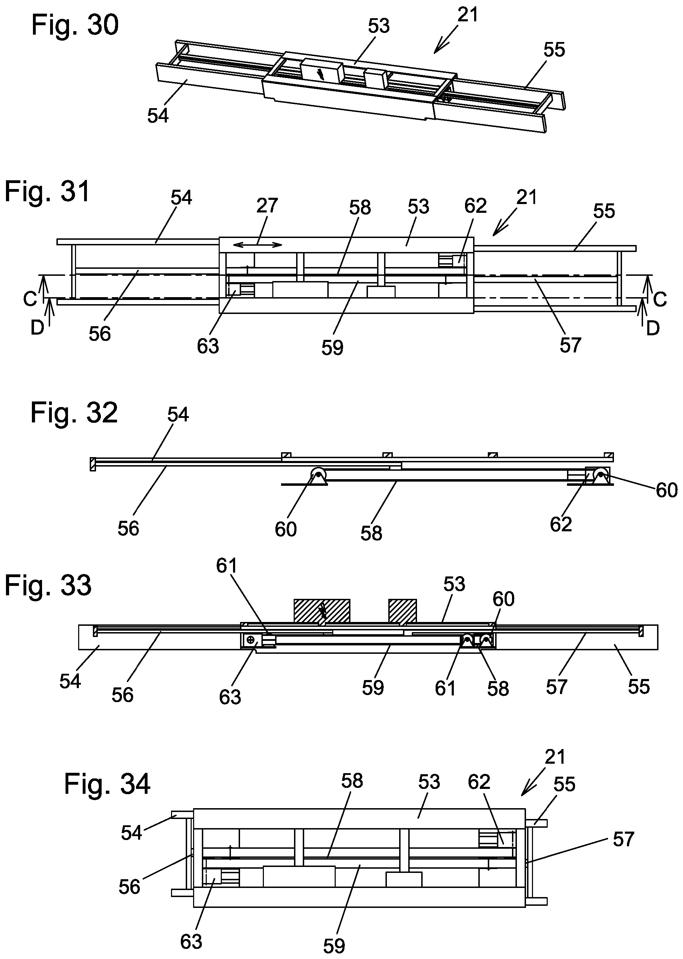

Bevorzugt ist jedoch, wie im hier gezeigten Ausführungsbeispiel auch realisiert, vorgesehen, dass die Container-Transportfahrzeuge 5 an verschieden lange Containertypen anpassbar sind, sodass ein einziges Container-Transportfahrzeug 5 unterschiedlich lange Container 2 aufnehmen, transportieren und auch wieder abstellen kann. Hierzu sehen bevorzugte Varianten der Container-Transportfahrzeuge 5, wie auch die in den Fig. 7 bis 34 gezeigte Variante vor, dass die Traverse 21 zur Anpassung der Länge 26 des Container-Aufnahmeraums 22 an verschieden lange Container 2 in der Längserstreckungsrichtung 27 der Traverse 21 längenverstellbar ausgebildet ist. Die Traverse 21 kann hierzu als eine Art Teleskop ausgebildet sein, sodass der Abstand zwischen den Fahrzeugteilen 19 und 20 und damit die Länge 26 des Container-Aufnahmeraums 22 an verschiedene Containertypen bzw. -längen anpassbar ist. Beim ersten Ausführungsbeispiel zeigen die Fig. 7 und 8 in diesem Sinne dasselbe Container-Transportfahrzeug 5, wobei die Länge der Traverse 21 und damit auch die Länge 26 des Container-Aufnahmeraums 22 an die jeweilige Länge des Containers 2 angepasst wurde. Ein Beispiel, wie eine solche teleskopierbar ausgebildete Traverse 21 ausgestaltet sein kann, wird weiter hinten anhand der Fig. 30 bis 34 erläutert. Natürlich gibt es aber auch andere Ausgestaltungsformen, wie eine solche Traverse 21 zur Längenverstellung des Container-Transportfahrzeugs 5 teleskopierbar ausgebildet sein kann.

Dass die Container-Transportfahrzeuge 5 vorzugsweise selbstfahrend ausgebildet sind, dies aber nicht zwingend sein müssen, wurde weiter vorne schon erläutert. Ebenso wie ihre bevorzugt drahtlose Kommunikation mit der Fahrzeugsteuerzentrale 17. Dies gilt auch für alle hier gezeigten Ausführungsbeispiele.

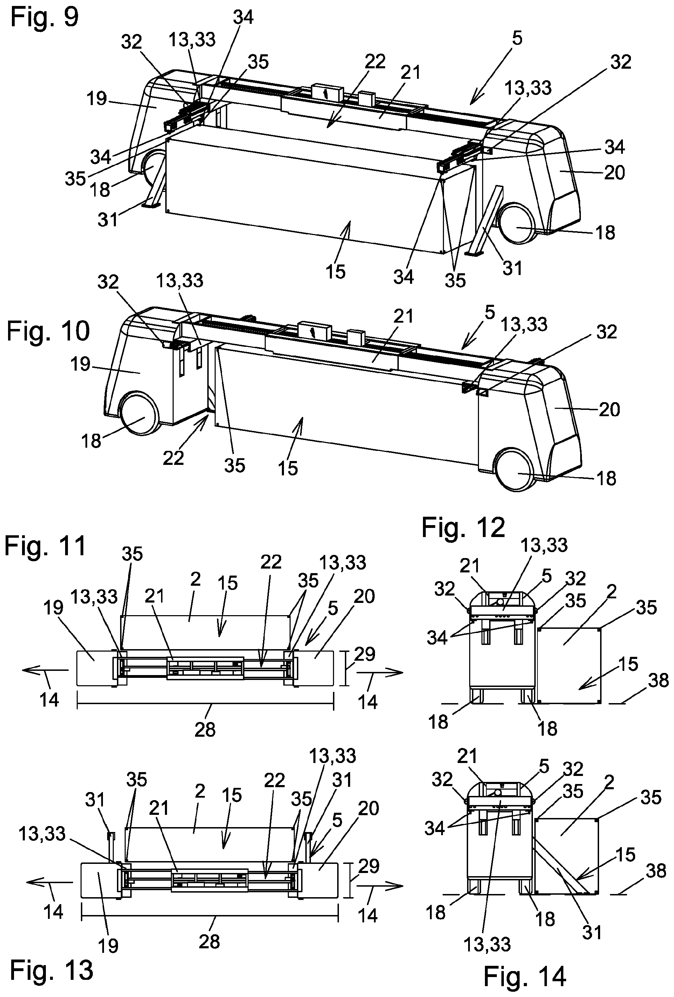

Bevorzugt ist, wie auch in diesem ersten Ausführungsbeispiel eines Container-Transportfahrzeugs 5 vorgesehen, dass die Lade- und Entladevorrichtung 13 des Fahrzeugs so ausgeführt ist, dass sie, bezogen auf die Richtung des Geradeausfahrens 14, zum Laden zumindest eines seitlich neben dem Container-Transportfahrzeug 5 stehenden Containers 2 in den Container-Aufnahmeraum 22 und entsprechend auch zum Entladen des zumindest einen Containers 2 aus dem Container-Aufnahmeraum 22 auf eine Seite 15 ausgebildet ist. Besonders bevorzugt ist vorgesehen, dass die Lade- und Entladevorrichtung 13 so ausgeführt ist, dass sie ein Be- und Entladen der Container 2 von und auf beide Seiten 15 neben dem Container-Transportfahrzeug 5 erlaubt. Dies ist exemplarisch in den Fig. 9 und 10 dargestellt. Fig. 9 zeigt, wie ein Container 2 von einer Seite 15 oder auf eine Seite 15 auf das Container-Transportfahrzeug 5 aufgeladen oder von diesem abgeladen werden kann. Fig. 10 zeigt denselben Vorgang zur anderen Seite 15 hin.

Damit das Container-Transportfahrzeug 5 beim Ein- und Ausladevorgang auf der Container-Abstellfläche 4 zu den Seiten hin abgestützt werden kann, weist es bevorzugt Seitenstützen 31 zum Abstützen des Fahrzeugs auf dem jeweiligen Untergrund 38 auf. Diese können, wie an sich z.B. von Lastkraftwagen bekannt, vor dem Be- oder Entladevorgang ausgefahren und nach Abschluss des Be- und Entladevorgangs auch wieder eingefahren werden.

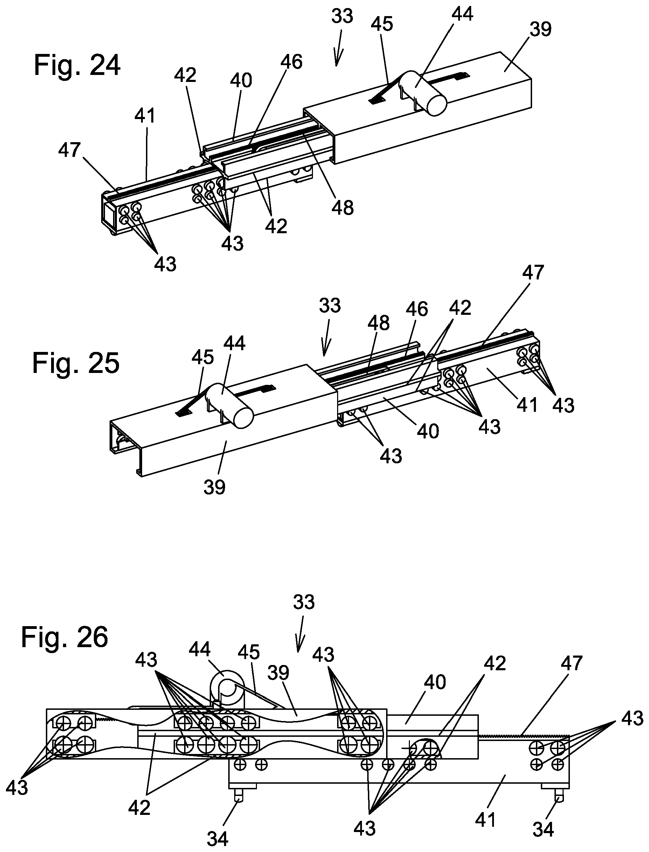

Die Lade- und Entladevorrichtung 13 des Container-Transportfahrzeug 5 des hier gezeigten ersten Ausführungsbeispiels umfasst zwei, bezogen auf die Richtung des Geradeausfahrens 14, seitlich, in diesem Ausführungsbeispiel beidseitig, ein- und ausfahrbare und in vertikaler Richtung 23 anhebbare und absenkbare Container-Tragelemente 33. Diese könnten auch als Teleskoparme bezeichnet werden. Solche teleskopierbaren Arme, welche Lasten aufnehmen und auch heben können, sind beim Stand der Technik an sich bekannt. Anhand der Fig. 24 bis 29 wird weiter hinten aber exemplarisch der Aufbau und die Funktionsweise der hier zum Einsatz kommenden Container-Tragelemente 33 erläutert.

An jedem der Container-Tragelemente 33 befinden sich in diesem Ausführungsbeispiel zwei Greifelemente 34, mit denen ein Container 2 am jeweiligen Container-Tragelement 33 befestigt werden kann. Im hier gezeigten Ausführungsbeispiel erfolgt die Befestigung der Greifelemente 34 am Container 2 an den in dieser Art des Containers 2 vorgesehenen Eckbeschlägen 35. Als Greifelemente 34 können, da es sich bei den Containern 2 um sogenannte ISO-Container handelt, an sich bekannte Twistlocks eingesetzt werden. Diese passen in die Eckbeschläge 35 der an sich bekannten ISO-Container. Die Funktionsweise der Twistlocks ist an sich bekannt, sodass die Greifelemente 34, welche hier in diesem Ausführungsbeispiel realisiert sind, nicht weiter erläutert werden müssen.

Anhand der Fig. 11 bis 22 wird nun der Vorgang des Beladens eines Container-Transportfahrzeugs 5 mit einem Container 2, also in anderen Worten der Vorgang des Aufladens eines Containers 2 auf ein Container-Transportfahrzeug 5, beispielhaft erläutert. Der Container 2 kann dabei sowohl auf der Container- Abstellfläche 4 als auch in einem Regalfach 7 stehen. Dies macht für den Auf- und auch für den entsprechend anders herum durchgeführten Abladevorgang keinen Unterschied. Die Fig. 11, 13, 15, 19 und 21 zeigen verschiedene Abschnitte des Aufladevorgangs jeweils in einer Draufsicht. Die Fig. 12, 14, 16, 17, 18, 20 und 22 zeigen jeweils schematisierte Vertikalschnitte durch Container 2 und Container-Transportfahrzeug 5.

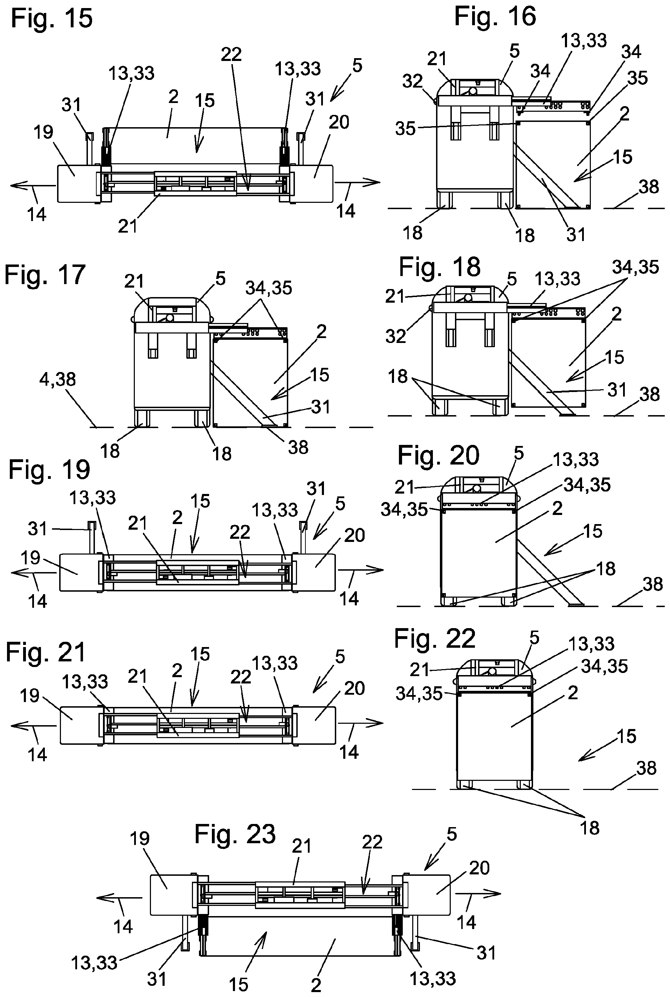

Zunächst fährt das Container-Transportfahrzeug 5, wie in den Fig. 11 und 12 gezeigt, so neben den auf einem Untergrund 38 abgestellten Container 2, dass dieser auf einer Seite 15 neben dem Container-Aufnahmeraum 22 des Container-Transportfahrzeugs 5 angeordnet ist. Anschließend werden auf dieser Seite 15, wie in den Fig. 13 und 14 gezeigt, die Seitenstützen 31 ausgefahren und auf dem Untergrund 38 abgestützt. Danach werden die Container-Tragelemente 33 auf diese Seite 15 ausgefahren, sodass sie mit den Greifelementen 34 entsprechend über dem Container 2 und seinen Eckbeschlägen 35 angeordnet sind. Dies ist in den Fig. 15 und 16 gezeigt. Anschließend werden die Container-Tragelemente 33 so weit abgesenkt, dass die Greifelemente 34 formschlüssig in den Eckbeschlägen 35 befestigt werden können. Dies ist schematisiert in Fig. 17 dargestellt. Sind die Greifelemente 34 entsprechend verriegelt, so wird der Container 2 an den Container-Tragelementen 33 vom Untergrund 38 abgehoben, wie dies Fig. 18 zeigt. Durch Einfahren der Container-Tragelemente 33 wird der Container 2 dann in den Container-Aufnahmeraum 22 eingefahren, siehe Fig. 19 und 20. Am Ende werden noch die Stützen 31 eingefahren, sodass dann der Ladevorgang, wie in Fig. 21 und 22 dargestellt, beendet ist und das Container-Transportfahrzeug 5 den aufgeladenen Container 2 entweder zu einem Regalfach 7 im Hochregallager 3 oder von diesem Regalfach 7 zurück zur Container-Abstellfläche 4 fahren kann. Dort erfolgt der Abladevorgang dann in gegenüber dem geschildeten Aufladevorgang entgegengesetzter Reihenfolge, also quasi ausgehend von den Fig. 21 und 22 hin zu den Fig. 11 und 12. Fig. 23 zeigt noch einmal eine Draufsicht wie Fig. 15. Hier soll nur noch einmal veranschaulicht werden, dass bei bevorzugten Container-Transportfahrzeugen 5 eben vorgesehen ist, dass die Container 2 von beiden Seiten 15 seitlich des Container-Transportfahrzeugs 5 auf- und abgeladen werden können.

Anhand der Fig. 24 bis 29 wird nun nachfolgend beispielhaft erläutert, wie die Container-Tragelemente 33 des Container-Transportfahrzeugs 5 gemäß des ersten Ausführungsbeispiels ausgeführt sein können. Wie bereits gesagt, ist dies aber nur ein Beispiel. Beim Stand der Technik sind grundsätzlich verschiedenste Technologien bekannt, wie solche teleskopierbaren Container-Tragelemente 33 ausgeführt sein könnten. Die Antriebe zum Anheben und Absenken der Container-Tragelemente in vertikaler Richtung 23 sind nicht extra eingezeichnet. Sie können in an sich bekannten Ausgestaltungsformen ausgeführt werden.

Die Fig. 24 und 25 zeigen zunächst, dass das jeweilige Container-Tragelement 33 sowohl in die eine als auch in die andere Richtung hin ausfahrbar ist, um so Container 2 von beiden Seiten 15 neben dem Container-Transportfahrzeug 5 aufnehmen bzw. dort abstellen zu können. Das jeweilige Container-Tragelement 33 weist ein Außenteil 39, ein Mittelteil 40 und ein Innenteil 41 auf, welche teleskopierbar ineinander gelagert sind. Das Mittelteil 40 weist hierzu Führungsschienen 42 auf. Die nach außen hin abstehenden, gut sichtbaren Führungsschienen 42 sind, wie insbesondere in der teilweise geschnittenen Ansicht gemäß Fig. 26 zu sehen, zwischen drehbar am Außenteil 39 gelagerten Führungsrollen 43 geführt. Die nach innen abstehenden Führungsschienen 42 des Mittelteils 40, welche eigentlich nur in Fig. 26 in den teilweise aufgebrochenen Darstellungen zu sehen sind, sind entsprechend zwischen Führungsrollen 43 geführt, welche drehbar am Innenteil 41 befestigt sind.

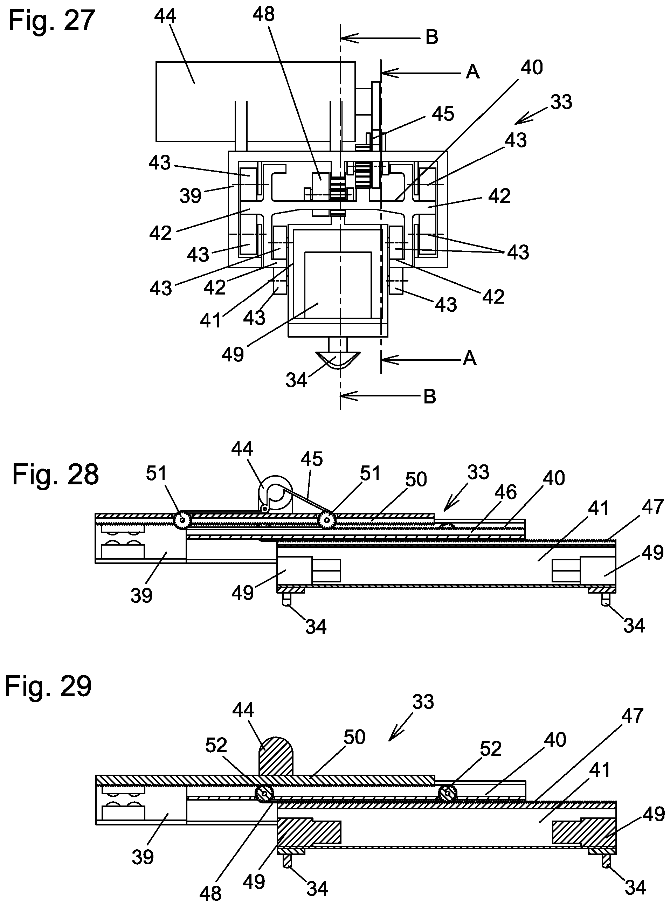

Die hier realisierte Art des Antriebs zum Ein- und Ausfahren von Mittelteil 40 und Innenteil 41 in und aus dem Außenteil 39 wird nachfolgend anhand der Fig. 27 bis 29 erläutert. Fig. 27 zeigt dabei einen Vertikalschnitt quer zur Längserstreckung durch das Container-Tragelement 33. Fig. 28 zeigt den hierzu orthogonalen Längsschnitt entlang der Schnittlinie AA. Fig. 29 zeigt den zu AA parallelen Längsschnitt entlang der Schnittlinie BB aus Fig. 27. Der hier beispielhaft realisierte Antrieb umfasst den Kettenantrieb bzw. Kettenantriebsmotor 44, welcher über eine Antriebskette 45 die beiden drehbar am Außenteil 39 fixierten Zahnräder 51 antreibt. Diese Zahnräder 51 greifen in eine Zahnstange 46, welche am Mittelteil 40 fixiert ist, ein. Durch Drehen der Zahnräder 51 mittels des Kettenantriebs 44 kann somit das Mittelteil 40 in das Außenteil 39 ein- und ausgefahren werden.

Wie in Fig. 29 zu sehen, sind am Mittelteil 40 zwei Zahnräder 52 drehbar befestigt, welche wiederum mittels einer Übertragungskette 48 miteinander zwangsgekoppelt sind. Durch Verschieben des Mittelteils 40 relativ zum Außenteil 39 wird über den Eingriff in die am Außenteil 39 fixierte Zahnstange 50 immer zumindest eines der Zahnräder 52 gedreht. Diese Drehbewegung wird über die Übertragungskette 48 zwangsweise auch auf das andere Zahnrad 52 übertragen. Zumindest eines der beiden Zahnräder 52 steht wiederum mit der Zahnstange 47, welche am Innenteil 41 ausgebildet ist, in Eingriff. Dies hat zur Folge, dass eine Relativverschiebung des Mittelteils 40 relativ zum Außenteil 39 zwangsläufig auch zu einer Relativverschiebung des Innenteils 41 relativ zum Mittelteil 40 und damit auch relativ zum Außenteil 39 führt. Dies hat zur Folge, dass das Innenteil 41 immer relativ zum Mittelteil 40 synchron mit der Ein- oder Ausfahrbewegung des Mittelteils 40 aus dem Außenteil 39 mit aus- oder eingefahren wird. In den Fig. 28 und 29 sind zusätzlich noch die Drehantriebe 49 zu sehen, mittels derer die hier als Twistlock ausgeführten Greifelemente 34 um ihre vertikale Achse gedreht werden können, um so die Greifelemente 34 in den Eckbeschlägen 35 des Containers 2 ver- und entriegeln zu können.

Anhand der Fig. 30 bis 34 wird nun noch erläutert, wie die Traverse 21 des Container-Transportfahrzeugs 5 teleskopierbar ausgeführt sein kann, um die Anpassung der Länge 28 des Container-Transportfahrzeugs 5 bzw. der Länge 26 des Container-Aufnahmeraums 22 an die jeweilige Containerlänge vornehmen zu können. Auch dies ist nur ein Beispiel, wie dies ausgeführt sein kann. Auch andere an sich bekannte Teleskope können hier als Traverse 21 gegebenenfalls entsprechend adaptiert eingesetzt werden.

Beim vorliegenden Beispiel weist die Traverse 21 ein Zentralteil 53 und zwei darin in Längserstreckungsrichtung 27 verschiebbar gelagerte Auszüge 54 und 55 auf. Jeder der Auszüge 54 und 55 ist in das Zentralteil 53 einschiebbar und aus diesem ausschiebbar. An den vom Zentralteil 53 abgewandten Enden der Auszüge 54 und 55 ist die Traverse 21 am ersten Fahrzeugteil 19 bzw. am zweiten Fahrzeugteil 20 befestigt. Dies ist in den Fig. 30 bis 34 allerdings nicht dargestellt.

Fig. 30 zeigt eine perspektivische Darstellung der Traverse 21 im ausgezogenen Zustand. Fig. 31 zeigt eine entsprechende Draufsicht. Fig. 32 zeigt den Schnitt CC, Fig. 33 den Schnitt DD durch die Traverse 21. Die Schnittlinien hierzu sind in Fig. 31 eingezeichnet. Fig. 34 zeigt eine Draufsicht auf die Traverse 21, bei der die Auszüge 54 und 55 nahezu vollständig in das Zentralteil 53 eingeschoben sind.

Am Zentralteil 53 sind zwei Zahnriemen 58 und 59 über Umlenkrollen 60 und 61 geführt. Der Zahnriemen 58 läuft über die drehbar, aber in ihrer Position fix am Zentralteil 53 gelagerten Rollen 60. Der andere Zahnriemen 59 läuft über die ebenfalls drehbar, aber in ihrer Position fix, am Zentralteil 53 angeordneten Umlenkrollen 61. Eine der Umlenkrollen 60 ist mittels des Antriebsmotors 62 angetrieben. Eine der Umlenkrollen 61 ist mittels des Antriebsmotors 63 angetrieben. Wie besonders gut in Fig. 32 zu sehen, ist am Zahnriemen 58 eine Übertragungsstange 56 mit einem ihrer Enden fixiert. Mit dem anderen Ende ist die Übertragungsstange 56 mit dem Auszug 54 verbunden. Durch Drehen der Umlenkrollen 60 mittels des Antriebsmotors 62 läuft der Zahnriemen 58 über die Umlenkrollen 60 ab. Dabei wird die Übertragungsstange 56 und damit auch der daran befestigte Auszug 54 zwangsweise mitbewegt, was zu einer Ein- und Ausfahrbewegung des Auszuges 54 relativ zum Zentralteil 53 führt.

Am anderen Auszug 55 ist mit ihrem einen Ende die Übertragungsstange 57 fixiert, welche mit ihrem anderen Ende am Zahnriemen 59 befestigt ist. Durch Drehen der Umlenkrollen 61 mittels des Antriebsmotors 63 wird beim Ablauf des Zahnriemens 59 in analoger Weise der Auszug 55 mitgeführt. Durch ein entsprechendes Betätigen der Antriebsmotoren 62 und 63 werden die Auszüge 54 und 55 somit in das Zentralteil 53 eingefahren und aus diesem auch wieder ausgefahren.

Fig. 35 zeigt eine Variante eines Container-Transportfahrzeugs 5, basierend auf der bislang geschilderten Ausgestaltungsform gemäß der Fig. 7 bis 34. Der wesentliche Unterschied besteht darin, dass bei der Variante gemäß Fig. 35 die Lade- und Entladevorrichtung 13 sowie der Container-Aufnahmeraum 22 des Container-Transportfahrzeugs 5 so ausgestaltet sind, dass das Container-Transportfahrzeug 5, wie in Fig. 35 dargestellt, auch zwei Container 2 gleichzeitig aufnehmen und transportieren kann. Hierzu sind am Zentralteil 53 der Traverse 21 zusätzliche Container-Tragelemente 33 angeordnet, welche ansonsten wie die bislang bereits beschriebenen und hier auch an den äußeren Rändern des Container-Aufnahmeraums 22 angeordneten Container-Tragelemente 33 ausgebildet sein können. Dies erlaubt es, wie in Fig. 35 dargestellt, gleichzeitig zwei Container 35, in ihrer Längsrichtung hintereinander angeordnet, in den Container-Aufnahmeraum 22 aufzunehmen. Auch hier kann über die Längenverstellbarkeit der Traverse 21 eine entsprechende Anpassung an die Länge der Container erfolgen.

Zusätzlich kann auch vorgesehen sein, dass die Container-Tragelemente 33 am Zentralteil 53 der Traverse 21 so hoch angehoben werden können, dass abweichend von den gezeigten Darstellungen auch ein einzelner, durchgehender Container 2 im Container-Aufnahmeraum 22 aufgenommen werden kann, ohne mit den zentralen Container-Tragelementen 33 am Zentralteil 53 der Traverse 21 zu kollidieren. Ansonsten gilt für dieses Ausführungsbeispiel gemäß Fig. 35 das, was weiter oben zum ersten Ausführungsbeispiel des Container-Transportfahrzeugs 5 ausgeführt wurde.

Die Fig. 36 und 37 zeigen eine weitere Variante eines Container-Transportfahrzeugs 5, welches grundsätzlich wie das erste Ausführungsbeispiel gemäß der Fig. 7 bis 34 ausgeführt ist. Im Unterschied zu diesem ersten Ausführungsbeispiel sind die Räder 18 des Container-Transportfahrzeugs 5 in dieser Variante gemäß der Fig. 36 und 37 aber mittels der Lenkung 16 bezogen auf die Richtung des Geradeausfahrens 14 um zumindest 90° um die jeweilige vertikale Achse 36 drehbar. Dies gilt in bevorzugten Ausgestaltungen für alle Räder 18 des Container-Transportfahrzeugs 5 und erlaubt es, dass das Container-Transportfahrzeug 5 auch in einer Richtung orthogonal zur Richtung des Geradeausfahrens 14 fahren kann.

Diese Lenkbarkeit um zumindest 90° erlaubt es, den Prozess des Auf- und Abladens des Containers 2 gegenüber den bislang geschilderten Ausführungsbeispielen des Container-Transportfahrzeugs 5 zu ändern. Es wird durch diese Art der Lenkung 16 möglich, dass das Container-Transportfahrzeug 5 gemäß der Fig. 36 und 37 zunächst neben den auf einem Untergrund 38 abgestellten Container 2 fährt und dann die Räder 18 in eine Richtung orthogonal zur Richtung des Geradeausfahrens 14 dreht und so über den Container 2 fährt, sodass dieser dann im Container-Aufnahmeraum 22 angeordnet ist. Bei diesen Varianten von Container-Transportfahrzeugen 5 müssen die Container-Tragelemente 33 dann auch nicht zwingend teleskopierbar ausgeführt sein. Es reicht, wenn sie in vertikaler Richtung 23 anhebbar und absenkbar sind. Im abgesenkten Zustand können dann die Greifelemente 34 in den Eckbeschlägen 35 des Containers 2 verriegelt und der Container anschließend so im Container-Aufnahmeraum 22 angehoben werden, dass das Container-Transportfahrzeug 5 anschließend den Container 2 je nach Bedarf zur Container-Abstellfläche 4 oder zu einem der Regalfächer 7 transportieren kann. Der Abladevorgang erfolgt dann insbesondere auf der Container-Abstellfläche 4 entsprechend, indem der Container 2 durch Absenken der Container-Tragelemente 33 zunächst auf dem Untergrund 38 abgestellt und dann nach Entriegeln der Greifelemente 34 und anschließendem Anheben der Container-Tragelemente 33 das Container-Transportfahrzeug 5 zur Seite hin vom auf dem Untergrund 38 stehenden Container 2 wegfährt.

Dieser Auf- und Abladevorgang mit der Variante gemäß Fig. 36 und 37 kann grundsätzlich sowohl auf der Container-Abstellfläche 4 als auch in den Regalfächern 7 des Hochregallagers 3 so praktiziert werden. Es müssen in den Regalfächern 7 hierzu lediglich entsprechende, zum jeweiligen Fahrweg 8 in orthogonaler Richtung ausgerichtete zusätzliche Fahrwege und entsprechend viel Platz für die Fahrzeugteile 19 und 20 vorhanden sein. Will man sich dies bei der Ausgestaltung des Hochregallagers 3 ersparen, so können die Container-Tragelemente 33 auch genau so teleskopierbar ausgeführt sein, wie beim ersten Ausführungsbeispiel des Container-Transportfahrzeugs 5 gemäß der Fig. 7 bis 34, sodass dann das Abladen eines Containers 2 in ein Regalfach 7 und auch die Entnahme eines Containers 2 aus dem Regalfach 7 im Hochregallager 3 wie beim ersten Ausführungsbeispiel erfolgen kann.

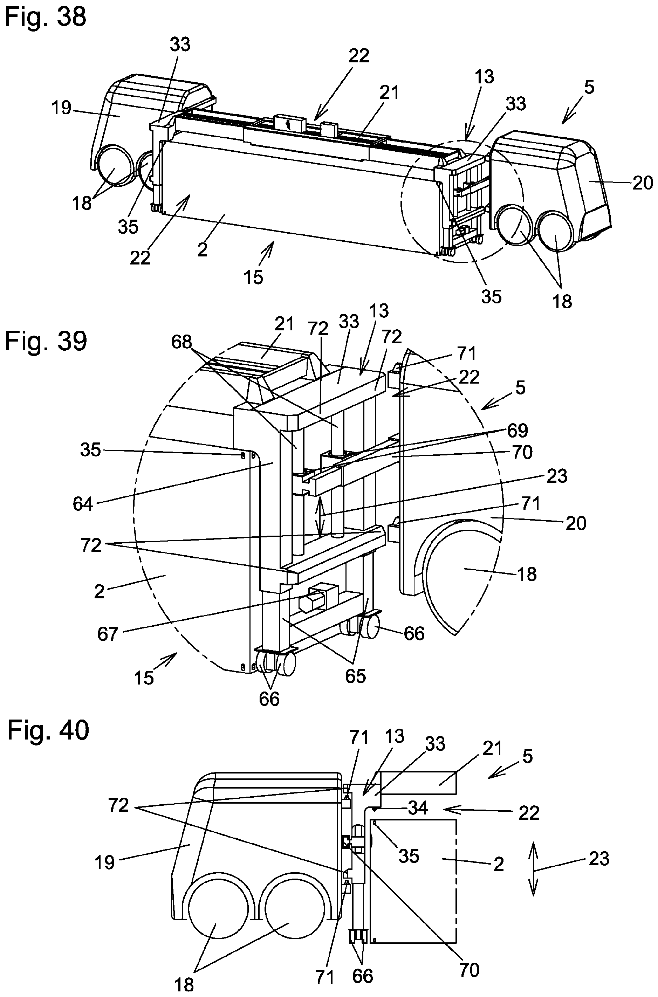

In den Fig. 38 bis 47 ist nun eine weitere Ausgestaltungsform eines Container-Transportfahrzeugs 5 dargestellt. Auch hier ist die Traverse 21 günstigerweise längenverstellbar ausgeführt, um eine entsprechende Anpassung an verschiedene Containerlängen vornehmen zu können. Anders als in den bisherigen Ausführungsbeispielen ist bei solchen Varianten, wie sie in den Fig. 38 bis 47 gezeigt sind, aber vorgesehen, dass die Lade- und Entladevorrichtung 13 des Container-Transportfahrzeugs 5 mit der Traverse 21 eine rahmenförmige Struktur bildet, welche zur Seite 15 hin ausgefahren werden kann, um so einen Container 2 auf- oder abzuladen. Konkret ist bei solchen Ausgestaltungsformen günstigerweise vorgesehen, dass die Container-Tragelemente 33 mittels der Traverse 21 miteinander verbunden sind und jeweils ein Oberteil 64 und ein Unterteil 65 aufweisen, wobei am Unterteil 65 mittels eines Rollenantriebs 67 angetriebene Rollen 66 angeordnet sind. Bevorzugt kann die rahmenförmige Struktur bestehend aus den beiden Container-Tragelementen 33 und der Traverse 21 dann mittels des Rollenantriebs 67 auf den Rollen 66 zur Seite 15 zum Auf- und Abladen des Containers 2 ein- und ausgefahren werden. Jedes Container-Tragelement 33 ist günstigerweise, wie hier auch realisiert, mittels einer horizontalen Schiebeführung 70 an einem der Fahrzeugteile 19 bzw. 20 verschiebbar gelagert. An der Schiebeführung 70 sind wiederum Führungsbuchsen 69 angeordnet, welche in vertikaler Richtung 23 verschiebbar auf Säulen 68 des Oberteils 64 des jeweiligen Container-Tragelements 33 gelagert sind. Die Säulen 68 sind fix im Oberteil 64 verankert. Das Oberteil 64 und das Unterteil 65 sind teleskopierbar in vertikaler Richtung 23 ineinander gelagert. Ein hier nicht dargestellter, aber günstigerweise innerhalb des Oberteils 64 und des Unterteils 65 angeordneter Antrieb sorgt dafür, dass das jeweilige Oberteil 64 und das jeweilige Unterteil 65 eines Container-Tragelements 33 relativ zueinander in vertikaler Richtung 23 verschiebbar sind. Dieser hier nicht dargestellte Antrieb zur Vertikalverstellung von Oberteil 64 und Unterteil 65 kann wie beim Stand der Technik an sich bekannt ausgeführt sein. Es kann sich um Hydraulik- oder Pneumatik-Zylinder, um Spindelantriebe oder andere geeignete Linearantriebe handeln.

Zusätzlich sind an den Oberteilen 64 noch Zapfenaufnahmen 72 vorgesehen, mit denen die Oberteile 64 der jeweiligen Container-Tragelemente 33 jeweils in entsprechende Zapfen 71 am jeweiligen Fahrzeugteil 19 bzw. 20 eingehängt werden können.

Die Längenverstellbarkeit bzw. -teleskopierbarkeit der Traverse 21 wie auch die Funktionsweise und Ausgestaltungsform der Greifelemente 34 kann wie bei den vorab bereits geschilderten Ausgestaltungsformen realisiert werden.

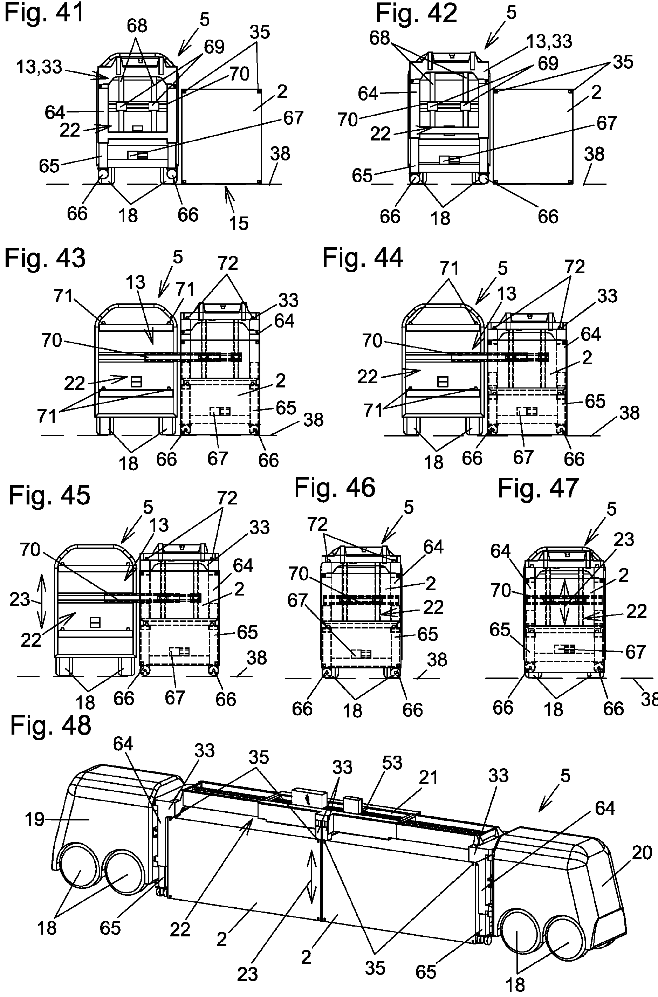

Anhand der Fig. 41 bis 47 wird nun beispielhaft der Vorgang des Aufladens eines Containers 2 auf dieses Container-Transportfahrzeug 5 gemäß der Fig. 39 bis 47 erläutert. Der Abladevorgang erfolgt in entsprechend umgekehrter Reihenfolge, ohne dass dies dann noch explizit dargelegt werden muss. Ein entsprechendes Auf- und Abladen von Containern 2 ist hier bei diesem Ausführungsbeispiel wiederum sowohl bei der Container-Abstellfläche 4 als auch bei den Regalfächern 7 im Hochregallager 3 möglich. Bei den Regalfächern 7 müssen dann entsprechend zusätzliche Fahrwege für die Rollen 66 in Richtung orthogonal zum jeweiligen Fahrweg 8 vorgesehen sein.

In Fig. 41 ist zunächst gezeigt, wie das Container-Transportfahrzeug 5 so neben den Container 2 gefahren ist, dass der Container 2 seitlich neben den Container-Aufnahmeraum 22 des Container-Transportfahrzeugs 5 angeordnet ist. Wie in Fig. 41 sichtbar, sind dabei die Rollen 66 der Unterteile 65 der Container-Tragelemente 33 noch über den Untergrund 38 angehoben. Die Container-Tragelemente 33 hängen in diesem Zustand mit ihren Zapfenaufnahmen 42 auf den Zapfen 41 und damit auf den Fahrzeugteilen 19 und 20.

Beim Ladevorgang wird nun gemäß Fig. 42 zunächst einmal das Unterteil 65 so weit abgelassen und dann, sobald die Rollen 66 auf dem Untergrund 38 stehen, das Oberteil 64 so weit in vertikaler Richtung 23 angehoben, dass die Zapfen 71 aus den Zapfenaufnahmen 72 herausgefahren sind. Anschließend können die Container-Tragelemente 33 inklusive der Traverse 21, wie in Fig. 43 gezeigt, mittels der Rollenantriebe 67 und der Rollen 66 zur Seite gefahren werden, sodass der Container 2 dann zwischen den Container-Tragelementen 33 und der Traverse 21 angeordnet ist. Anschließend wird, wie in Fig. 44 dargestellt, dann das Oberteil 64 so weit abgesenkt, dass die Greifelemente 34 der Container-Tragelemente 33 in die jeweiligen oberen Eckbeschläge 35 des Containers 2 eingefahren und dort formschlüssig verriegelt werden können. Bei diesem Ablassen des Oberteils 64 werden die Säulen 68 entsprechend weit in den Führungsbuchsen 69 in vertikaler Richtung 23 verschoben. Nach erfolgtem Verriegeln der Greifelemente 34 werden die Oberteile 64 mitsamt der Traverse 21 und dem nun an den Greifelementen 34 verriegelten Container 2 in vertikaler Richtung 23 angehoben, sodass der Container 2 vom Untergrund 38 abgehoben ist, wie dies in Fig. 45 dargestellt ist. Dies erfolgt mittels der Antriebe, welche eine Relativverschiebung zwischen Oberteil 64 und Unterteil 65 in vertikaler Richtung 23 ermöglichen. Nun wird die rahmenförmige Struktur bestehend aus den Container-Tragelementen 33 und der Traverse 21 zusammen mit dem daran hängenden Container 2 mittels der Rollen 66 und des Rollenantriebs 67 in den Container-Aufnahmeraum 22 zwischen dem ersten und dem zweiten Fahrzeugteil 19 und 20 so weit eingefahren, dass die Zapfenaufnahme 72 wieder über den Zapfen 71 der Fahrzeugteile 19 und 20 zu liegen kommen, siehe Fig. 46. Nun wird anschließend wiederum das Oberteil 64 so weit in vertikaler Richtung 23 abgesenkt, dass die Zapfenaufnahmen 72 auf den Zapfen 71 zu liegen kommen. Anschließend werden die Unterteile 65 so weit angehoben, dass die Rollen 66 vom Untergrund 38 abgehoben sind. Die rahmenförmige Struktur bestehend aus den Container-Tragelementen 33 und der Traverse 21 hängt nun samt Container 2 an den Fahrzeugteilen 19 und 20, so wie dies in Fig. 47 dargestellt ist. Ist dieser Zustand erreicht, so ist der Ladevorgang abgeschlossen und das Container-Transportfahrzeug 5 kann den Container 2 an die gewünschte Stelle auf der Container-Abstellfläche 4 bzw. zum gewünschten Regalfach 7 im Hochregallager 3 transportieren. Der nun folgende Abladevorgang erfolgt, wie bereits ausgeführt, nun in umgekehrter Reihenfolge wie der Aufladevorgang, ohne dass dies weiter erläutert werden muss.

Fig. 48 zeigt noch eine Abwandlungsform eines Container-Transportfahrzeugs 5, basierend auf der Variante gemäß der Fig. 39 bis 47. Hier besteht der wesentliche Unterschied darin, dass das Container-Transportfahrzeug 5 gemäß Fig. 48 wiederum dazu ausgelegt ist, nicht nur einen Container 2 sondern zwei in Längsrichtung hintereinander angeordnete Container 2 gleichzeitig in den Container-Aufnahmeraum 22 aufzunehmen und zu transportieren. Hierzu sind am Zentralteil 53 der Traverse 21 wiederum zusätzliche Container-Tragelemente 33 mit entsprechenden Greifelementen 34 vorgesehen. Diese zusätzlichen Container-Tragelemente 33 können starr am Zentralteil 53 der Traverse 21 angeordnet sein. Bevorzugte Ausgestaltungsformen sehen allerdings vor, dass diese zusätzlichen Tragelemente 33 in vertikaler Richtung 23 gegenüber dem Zentralteil 53 der Traverse 21 verfahrbar ausgestaltet sind. Dies ermöglicht es, die Container-Tragelemente 33 auch so weit nach oben zu fahren, dass ein einzelner Container 2 an den äußeren Container-Tragelementen 33 befestigt im Container-Aufnahmeraum 22 angeordnet werden kann.

Bei Container-Transportfahrzeugen 5, wie sie in den Fig. 38 bis 48 gezeigt sind, kann auch auf die Seitenstützen 31 und 32 verzichtet werden.

**Legende zu den Hinweisziffern:**

| | | | |
|---|---|---|---|
| 1 | Containerterminal | 26 | Länge |
| 2 | Container | 27 | Längserstreckungs-richtung |
| 3 | Hochregallager | | |
| 4 | Container-Abstellfläche | 28 | Länge |
| 5 | Container-Transportfahrzeug | 29 | Breite |
| | | 30 | Höhe |
| 6 | Lageretage | 31 | Seitenstütze |
| 7 | Regalfach | 32 | Seitenstütze |
| 8 | Fahrweg | 33 | Container-Tragelement |
| 9 | Zu- und Abfahrtvorrichtung | 34 | Greifelement |
| | | 35 | Eckbeschlag |
| 10 | Rampe | 36 | vertikale Achse |
| 11 | Aufzug | 37 | Außenhülle |
| 12 | Plattform | 38 | Untergrund |
| 13 | Lade- und Entladevorrichtung | 39 | Außenteil |
| | | 40 | Mittelteil |
| 14 | Richtung des Geradeausfahrens | 41 | Innenteil |
| | | 42 | Führungsschiene |
| 15 | Seite | 43 | Führungsrolle |
| 16 | Lenkung | 44 | Kettenantrieb |
| 17 | Fahrzeugsteuerzentrale | 45 | Antriebskette |
| 18 | Rad | 46 | Zahnstange |
| 19 | erstes Fahrzeugteil | 47 | Zahnstange |
| 20 | zweites Fahrzeugteil | 48 | Übertragungskette |
| 21 | Traverse | 49 | Drehantrieb |
| 22 | Container-Aufnahmeraum | 50 | Zahnstange |
| 23 | vertikale Richtung | 51 | Zahnrad |
| 24 | Abstand | 52 | Zahnrad |
| 25 | Unterkante | 53 | Zentralteil |
| 54 | Auszug | | |
| 55 | Auszug | | |
| 56 | Übertragungsstange | | |
| 57 | Übertragungsstange | | |
| 58 | Zahnriemen | | |
| 59 | Zahnriemen | | |
| 60 | Umlenkrolle | | |
| 61 | Umlenkrolle | | |
| 62 | Antriebsmotor | | |
| 63 | Antriebsmotor | | |
| 64 | Oberteil | | |
| 65 | Unterteil | | |
| 66 | Rolle | | |
| 67 | Rollenantrieb | | |
| 68 | Säule | | |
| 69 | Führungsbuchse | | |
| 70 | Schiebeführung | | |
| 71 | Zapfen | | |
| 72 | Zapfenaufnahme | | |

## Patentansprüche

1. Containerterminal (1) zum Umschlag von Containern (2), wobei das Containerterminal (1)) zumindest ein Hochregallager (3) und zumindest eine, außerhalb des Hochregallagers (3) angeordnete Container-Abstellfläche (4) und eine Vielzahl von Container-Transportfahrzeugen (5) zum Transport der Container (2) aufweist, wobei das Hochregallager (3) mehrere übereinander angeordnete Lageretagen (6) und in jeder Lageretage (6) mehrere Regalfächer (7) zur Aufnahme von zumindest einem der Container (2) aufweist, wobei jede Lageretage (6) zwischen den Regalfächern (7) zumindest einen, mit den Container-Transportfahrzeugen (5) befahrbaren Fahrweg (8) aufweist und das Containerterminal (1) zumindest eine, die Container-Abstellfläche (4) mit den Fahrwegen (8) in den Lageretagen (6) verbindende und mit den Container-Transportfahrzeugen (5) befahrbare Zu- und Abfahrtvorrichtung (9) aufweist, **dadurch gekennzeichnet, dass** das Containerterminal (1) ein Containerterminal (1) zum Umschlag von ISO-Containern (2) ist und die Container-Transportfahrzeuge (5) jeweils Räder und eine Lenkung zum Geradeausfahren und zum Kurvenfahren auf einem Untergrund aufweisen, so dass die Container-Transportfahrzeuge (5) zu einer beliebigen Stelle auf der Container-Abstellfläche (4) fahrbar sind, um dort ISO-Container (2) abzuholen oder abzuladen, wobei die Container-Transportfahrzeuge (5) dazu in der Lage sind, ISO-Container (2) selbst, ohne fremde Hilfsmittel sowohl auf der Container-Abstellfläche (4) als auch im Hochregallager (3) aufzuladen und abzuladen.

2. Containerterminal (1) nach Anspruch 1, **dadurch gekennzeichnet, dass** die Zu- und Abfahrtvorrichtung (9) eine mit den Container-Transportfahrzeugen (5) befahrbare Rampe (10) ist und/oder dass die Zu- und Abfahrtvorrichtung (9) ein Aufzug (11) für die Container-Transportfahrzeuge (5) ist.

3. Containerterminal (1) nach Anspruch 1 oder 2, **dadurch gekennzeichnet, dass** zumindest ein Teil der Regalfächer (7) in der jeweiligen Lageretage (6) entlang des Fahrweges (8) dieser Lageretage (6) in einer Reihe hintereinander angeordnet sind und/oder dass in der jeweiligen Lageretage (6) die Regalfächer (7) seitlich neben dem Fahrweg (8), vorzugsweise auf beiden Seiten des Fahrweges (8), dieser Lageretage (6) angeordnet sind.

4. Containerterminal (1) nach einem der Ansprüche 1 bis 3, **dadurch gekennzeichnet, dass** zumindest eine der Lageretagen (6) zwei, vorzugsweise voneinander beabstandet angeordnete und zueinander parallel verlaufende, Fahrwege (8) aufweist und zwischen diesen Fahrwegen (8) und der Zu- und Abfahrtvorrichtung (9) eine befahrbare Plattform (12) für das Zufahren der Container-Transportfahrzeuge (5) von der Zu- und Abfahrtvorrichtung (9) zu den Fahrwegen (8) dieser Lageretage (6) und/oder für das Zufahren der Container-Transportfahrzeuge (5) von den Fahrwegen (8) dieser Lageretage (6) zu der Zu- und Abfahrtvorrichtung (9) angeordnet ist.

5. Containerterminal (1) nach einem der Ansprüche 1 bis 4, **dadurch gekennzeichnet, dass** die Container-Transportfahrzeuge (5) jeweils eine Lade- und Entladevorrichtung (13) zum Laden zumindest eines Containers (2) auf das Container-Transportfahrzeug (5) und zum Entladen des zumindest einen Containers (2) vom Container-Transportfahrzeug (5) aufweisen.

6. Containerterminal (1) nach Anspruch 5, **dadurch gekennzeichnet, dass** die Container-Transportfahrzeuge (5) jeweils eine Richtung des Geradeausfahrens (14) aufweisen und die Lade- und Entladevorrichtung (13) des jeweiligen Container-Transportfahrzeugs (5) bezogen auf die Richtung des Geradeausfahrens (14) zum Laden zumindest eines seitlich neben dem Container-Transportfahrzeug (5) stehenden Containers (2) auf das Container-Transportfahrzeug (5) und zum Entladen des zumindest einen Containers (2) vom Container-Transportfahrzeug (5) auf eine Seite (15) neben dem Container-Transportfahrzeug (5) ausgebildet ist.

7. Containerterminal (1) nach einem der Ansprüche 1 bis 6, **dadurch gekennzeichnet, dass** die Container-Transportfahrzeuge (5) selbstfahrend ausgebildet sind und/oder das Containerterminal (1) eine Fahrzeugsteuerzentrale (17) aufweist von der aus die Container-Transportfahrzeuge (5) drahtlos fernsteuerbar sind.

8. Verfahren zum Betrieb eines Containerterminals (1) nach einem der Ansprüche 1 bis 7, **dadurch gekennzeichnet, dass** der jeweilige Container (2) zum Einlagern in eines der Regalfächer (7) vom Container-Transportfahrzeug (5) auf der Container-Abstellfläche (4) abgeholt und mit dem Container-Transportfahrzeug (5) über die Zu- und Abfahrtvorrichtung (9) und den jeweiligen Fahrweg (8) der jeweiligen Lageretage (6) bis neben das Regalfach (7) gefahren und dann in das Regalfach (7) eingelagert wird und/oder dass der jeweilige Container (2) zum Auslagern aus einem der Regalfächer (7) vom Container-Transportfahrzeug (5) am jeweiligen Regalfach (7) abgeholt und mit dem Container-Transportfahrzeug (5) über den jeweiligen Fahrweg (8) der jeweiligen Lageretage (6) und die Zu- und Abfahrtvorrichtung (9) zur Container-Abstellfläche (4) gefahren und dort vom Container-Transportfahrzeug (5) entladen wird.

9. Verfahren nach Anspruch 8, **dadurch gekennzeichnet, dass** der jeweilige Container (2) mittels einer bzw. der Lade- und Entladevorrichtung (13) des Container-Transportfahrzeugs (5) auf das Container-Transportfahrzeug (5) geladen und vom Container-Transportfahrzeug (5) entladen wird.

## Claims

1. A container terminal (1) for handling containers (2), wherein the container terminal (1) has at least one high-bay store (3) and at least one container storage face (4) which is arranged outside the high-bay store (3) and a large number of container transport vehicles (5) for transporting the containers (2), wherein the high-bay store (3) has a plurality of storage levels (6) which are arranged one above the other and has in each storage level (6) a plurality of shelf compartments (7) for receiving at least one of the containers (2), wherein each storage level (6) has between the shelf compartments (7) at least one travel path (8) which can be travelled by the container transport vehicles (5) and the container terminal (1) has at least one approach and departure apparatus (9) which connects the container storage face (4) to the travel paths (8) in the storage levels (6) and which can be travelled by the container transport vehicles (5), **characterised in that** the container terminal (1) is a container terminal (1) for handling ISO containers (2) and the container transport vehicles (5) in each case have wheels and a steering system for travelling straight-ahead and for travelling on bends on underlying ground so that the container transport vehicles (5) can be driven to any location on the container storage face (4) in order to collect or deposit ISO containers (2) at that location, wherein the container transport vehicles (5) are capable of loading and unloading ISO containers (2) themselves, without remote assistance both on the container storage face (4) and in the high-bay store (3).

2. The container terminal (1) according to claim 1, **characterised in that** the approach and departure apparatus (9) is a ramp (10) which can be travelled by the container transport vehicles (5) and/or **in that** the approach and departure apparatus (9) is a lift (11) for the container transport vehicles (5).

3. The container terminal (1) according to claim 1 or 2, **characterised in that** at least some of the shelf compartments (7) in the respective storage level (6) are arranged along the travel path (8) of this storage level (6) in a row one behind the other and/or **in that** in the respective storage level (6) the shelf compartments (7) are arranged laterally beside the travel path (8), preferably at both sides of the travel path (8), of this storage level (6).

4. The container terminal (1) according to any one of claims 1 to 3, **characterised in that** at least one of the storage levels (6) has two travel paths (8) which are preferably arranged spaced apart from each other and which extend parallel with each other and between these travel paths (8) and the approach and departure apparatus (9) an accessible platform (12) for the approach of the container transport vehicles (5) by the approach and departure apparatus (9) to the travel paths (8) of this storage level (6) and/or for the approach of the container transport vehicles (5) from the travel paths (8) of this storage level (6) to the approach and departure apparatus (9) is arranged.

5. The container terminal (1) according to any one of claims 1 to 4, **characterised in that** the container transport vehicles (5) in each case have a loading and unloading apparatus (13) for loading at least one container (2) on the container transport vehicle (5) and for unloading the at least one container (2) from the container transport vehicle (5).

6. The container terminal (1) according to claim 5, **characterised in that** the container transport vehicles (5) in each case have a direction of straight-ahead travel (14) and the loading and unloading apparatus (13) of the respective container transport vehicle (5) with respect to the direction of straight-ahead travel (14) for loading at least one container (2) which is located laterally beside the container transport vehicle (5) on the container transport vehicle (5) and for unloading the at least one container (2) from the container transport vehicle (5) at one side (15) is formed beside the container transport vehicle (5).

7. The container terminal (1) according to any one of claims 1 to 6, **characterised in that** the container transport vehicles (5) are constructed to be self-driving and/or the container terminal (1) has a central vehicle control station (17) from which the container transport vehicles (5) can be remotely controlled wirelessly.

8. A method for operating a container terminal (1) according to any one of claims 1 to 7, **characterised in that** the respective container (2) is collected for storage in one of the shelf compartments (7) from the container transport vehicle (5) on the container storage face (4) and moved with the container transport vehicle (5) via the approach and departure apparatus (9) and the respective travel path (8) of the respective storage level (6) to a position beside the shelf compartment (7) and then stored in the shelf compartment (7) and/or **in that** the respective container (2) for unloading from one of the shelf compartments (7) is collected by the container transport vehicle (5) on the respective shelf compartment (7) and moved with the container transport vehicle (5) over the respective travel path (8) of the respective storage level (6) and the approach and departure apparatus (9) to the container storage face (4) and is unloaded there from the container transport vehicle (5).

9. The method according to claim 8, **characterised in that** the respective container (2) is loaded onto the container transport vehicle (5) and unloaded from the container transport vehicle (5) by means of a or the loading and unloading apparatus (13) of the container transport vehicle (5).

## Revendications

1. Terminal à conteneurs (1) destiné à la manutention de conteneurs (2), le terminal à conteneurs (1) comportant au moins un magasin à rayonnages en hauteur (3), au moins une surface de stationnement de conteneurs (4) disposée à l'extérieur du magasin à rayonnages en hauteur (3), et une pluralité de véhicules de transport de conteneurs (5) pour le transport des conteneurs (2), le magasin à rayonnages en hauteur (3) comportant plusieurs niveaux de stockage (6) disposés les uns au-dessus des autres, et dans chaque niveau de stockage (6) plusieurs compartiments de rayonnage (7) destinés à recevoir au moins un des conteneurs (2), chaque niveau de stockage (6) comportant, entre les compartiments de rayonnage (7), au moins une voie de circulation (8) praticable par les véhicules de transport de conteneurs (5), et le terminal à conteneurs (1) comportant au moins un dispositif d'entrée et de sortie (9) praticable par les véhicules de transport de conteneurs (5) et reliant la surface de stationnement de conteneurs (4) aux voies de circulation (8) dans les niveaux de stockage (6), **caractérisé en ce que** le terminal à conteneurs (1) est un terminal à conteneurs (1) destiné à la manutention de conteneurs ISO (2) et les véhicules de transport de conteneurs (5) sont dotés chacun de roues et d'une direction permettant de se déplacer en ligne droite et en courbe sur une surface, de sorte que les véhicules de transport de conteneurs (5) peuvent être déplacés vers n'importe quel point de la surface de stationnement de conteneurs (4) pour y prendre ou y déposer des conteneurs ISO (2), les véhicules de transport de conteneurs (5) étant capables, sans moyens auxiliaires extérieurs, de charger et de décharger eux-mêmes les conteneurs ISO (2) tant sur la surface de stationnement de conteneurs (4) que dans le magasin à rayonnages en hauteur (3).

2. Terminal à conteneurs (1) selon la revendication 1, **caractérisé en ce que** le dispositif d'entrée et de sortie (9) est une rampe (10) praticable par les véhicules de transport de conteneurs (5) et/ou **en ce que** le dispositif d'entrée et de sortie (9) est un ascenseur (11) pour les véhicules de transport de conteneurs (5).

3. Terminal à conteneurs (1) selon la revendication 1 ou 2, **caractérisé en ce qu'**au moins une partie des compartiments de rayonnage (7) dans le niveau de stockage (6) concerné sont disposés alignés les uns derrière les autres le long de la voie de circulation (8) de ce niveau de stockage (6), et/ou **en ce que**, dans le niveau de stockage (6) concerné, les compartiments de rayonnage (7) sont disposés latéralement à côté de la voie de circulation (8) de ce niveau de stockage (6), de préférence de part et d'autre de la voie de circulation (8).

4. Terminal à conteneurs (1) selon l'une quelconque des revendications 1 à 3, **caractérisé en ce qu'**au moins un des niveaux de stockage (6) comporte deux voies de circulation (8), de préférence disposées à distance l'une de l'autre et s'étendant parallèlement entre elles, et **en ce qu'**une plateforme carrossable (12) est disposée entre ces voies de circulation (8) et le dispositif d'entrée et de sortie (9) pour permettre aux véhicules de transport de conteneurs (5) de circuler du dispositif d'entrée et de sortie (9) vers les voies de circulation (8) de ce niveau de stockage (6) et/ou des voies de circulation (8) de ce niveau de stockage (6) vers le dispositif d'entrée et de sortie (9).

5. Terminal à conteneurs (1) selon l'une quelconque des revendications 1 à 4, **caractérisé en ce que** les véhicules de transport de conteneurs (5) comportent chacun un dispositif de chargement et de déchargement (13) pour charger au moins un conteneur (2) sur le véhicule de transport de conteneurs (5) et pour décharger ledit au moins un conteneur (2) du véhicule de transport de conteneurs (5).

6. Terminal à conteneurs (1) selon la revendication 5, **caractérisé en ce que** les véhicules de transport de conteneurs (5) comportent chacun une direction de déplacement en ligne droite (14), et **en ce que** le dispositif de chargement et de déchargement (13) du véhicule de transport de conteneurs (5) concerné est conçu, par rapport à la direction de déplacement en ligne droite (14), pour charger au moins un conteneur (2) situé latéralement à côté du véhicule de transport de conteneurs (5) sur le véhicule de transport de conteneurs (5) et pour décharger ledit au moins un conteneur (2) du véhicule de transport de conteneurs (5) sur un côté (15) à côté du véhicule de transport de conteneurs (5).

7. Terminal à conteneurs (1) selon l'une quelconque des revendications 1 à 6, **caractérisé en ce que** les véhicules de transport de conteneurs (5) sont conçus comme des véhicules autonomes et/ou **en ce que** le terminal à conteneurs (1) comporte une centrale de commande de véhicules (17) à partir de laquelle les véhicules de transport de conteneurs (5) peuvent être télécommandés sans fil.

8. Procédé d'exploitation d'un terminal à conteneurs (1) selon l'une quelconque des revendications 1 à 7, **caractérisé en ce que** le conteneur (2) concerné est, pour son stockage dans un des compartiments de rayonnage (7), prélevé par le véhicule de transport de conteneurs (5) sur la surface de stationnement de conteneurs (4), transporté par le véhicule de transport de conteneurs (5) via le dispositif d'entrée et de sortie (9) et la voie de circulation (8) concernée du niveau de stockage (6) concerné jusqu'à côté du compartiment de rayonnage (7), puis stocké dans le compartiment de rayonnage (7), et/ou **en ce que** le conteneur (2) concerné est, pour son déstockage d'un des compartiments de rayonnage (7), prélevé du compartiment de rayonnage (7) concerné par le véhicule de transport de conteneurs (5), transporté par le véhicule de transport de conteneurs (5) via la voie de circulation (8) concernée du niveau de stockage (6) concerné et le dispositif d'entrée et de sortie (9) jusqu'à la surface de stationnement de conteneurs (4), et y est déchargé par le véhicule de transport de conteneurs (5).

9. Procédé selon la revendication 8, **caractérisé en ce que** le conteneur (2) concerné est chargé sur le véhicule de transport de conteneurs (5) et déchargé du véhicule de transport de conteneurs (5) au moyen d'un ou du dispositif de chargement et de déchargement (13) du véhicule de transport de conteneurs (5).
